# EUROPEAN PATENT APPLICATION

(11) **EP 0 986 068 A1**
(43) Date of publication of application: **15.03.2000**
(21) Application number: 98932664.0
(22) Date of filing: 29.05.1998
(51) Int. Cl.: G21C 1/00

(54) **CORE, HEAT-RELEASE ASSEMBLY AND FUEL ELEMENT FOR WATER -MODERATED NUCLEAR REACTOR**

(30) Priority: 30.05.1997 RU 97108721
(71) Applicant: Tsentr Komplexnogo Razvitiya Tekhnologii I Energotekhnologicheskikh Sistem "Kortes", Moscow, 123182 (RU); Otkrytoe Aktsionernoe Obschestvo "Mashinostroitelny Zavod", Elektrostal,144001 (RU)
(72) Inventor: ALEXEEV, Pavel Nikolaevich, Moscow, 123367 (RU); GOROKHOV, Vladimir Fedorovich, Moscow, 123098 (RU); DORONIN, Alexandr Sergeevich, Moscow, 123557 (RU); DUKHOVENSKY, Andrei Sergeevich, Moscow, 123458 (RU); LUNIN, Gleb Leonidovich, Moscow, 123098 (RU); PROSHKIN, Alexandr Alexandrovich, Moscow, 123098 (RU); PANUSHKIN, Albert Konstantinovich, Elektrostal, 144007 (RU); MEZHUEV, Valery Alexeevich, Elektrostal, 144007 (RU); POTOSKAEV, Gennady Grigorievich, Elektrostal, 144009 (RU); KURSKOV, Vladimir Sergeevich, Elektrostal, 144007 (RU); BEK, Evgeny Glebovich, Elektrostal, 144007 (RU); FEDOROV, Valentin Grigorievich, Podolsk, 142100 (RU); VASILCHENKO, Ivan Nikitovich, Podolsk, 142100 (RU)
(74) Representative: Gerbino, Angelo
(86) International application number: RU9800162
(87) International publication number: WO9854730

(57) **Abstract**

The present invention may be used in nuclear technology for developing the structures of fuel elements, heat-release assemblies constructed from said fuel elements and cores of water-cooled reactors. In this invention, the outer diameter of fuel elements as well as the diameter and mass of the fuel core are selected from specific ranges depending on the nominal thermal capacity of the reactor.The heat-release assemblies, which contain a bundle of fuel elements, are characterised by fuel element shells of varying dimensions and by the varying fuel mass in the bundle depending on the predetermined number of fuel elements and on the reactor's nominal thermal capacity. The reactor cores formed from the heat-release assemblies are manufactured taking account of the reactor's thermal capacity, of the water-uranium ratio and of the number of fuel elements in said heat-release assemblies. The reactor cores contain fuel elements whose shells have outer and inner diameters of different sizes.

## Description

### Field of Invention

The present invention relates generally to nuclear engineering and more particularly is concerned with improvements to designs of fuel elements included in upgraded fuel assemblies from which an improved core is made up. The invention is useful in various types of water-cooled vessel reactors using fuel elements arranged in parallel, especially, in water-cooled and water-moderated power reactors of VVER-440 or VVER-1000 type.

### Background of the Invention

The prospects for development of nuclear engineering depend to a large extent on solution of the problem of providing safety to nuclear power plants (NPP). In designing reactor cores which offer a new level of NPP's safety, nuclear designers have to take advantage of well-proven prior art and positive experience from designing and exploitation of operating NPPs. The gravest threats for NPPs, in particular, for those with water-moderated power reactors, are posed by loss-of-coolant accidents. If redundant passive and active safety systems, which should introduce neutron absorber and cooling agent into the primary coolant circuit, fail to respond, evolution of the accident may lead to catastrophic consequences.

The problem of improving the level of safety of operating NPPs with water-moderated reactors can be solved in different ways. However, for the time being, the general approach to the problem is to enhance reliability of protective systems, to improve separate units and facilities and to optimize operation conditions and schedules.

However, the issues of minimizing, in normal conditions, the thermal stress on fuel elements whose cladding tubes make one of the main barriers to propagation of radioactive substance and can lose tightness at accidents, primarily, due to overheating, have not been touched on. This trend is caused mainly by long-standing advantageous experience from operation of the existing nuclear fuel design and by well-elaborated production process.

In the course of introduction into nuclear power production, pressurized-water nuclear reactors have undergone qualitative modifications, rather than structural. Main technical concepts laid in designs of domestic water-moderated reactors (also known as VVER reactors) are as follows :
all facilities inside the reactor vessel should be retrievable to allow their repair and replacement, and monitoring of the inner surface of the reactor vessel;
components of the control and protective system (CPS) and the reactor operation control facilities are arranged in the reactor upper part to provide convenient maintenance thereof;
fuel assemblies, which allow the creation of the core configuration close to cylindrical, are accommodated in a retrievable barrel whose bottom is a support structure of the core. At the top, the packages are pressed by a plate to prevent the fuel assemblies from floating up (due to the axial pressure gradient) and to space them apart;
a coolant flows upwardly through the core to promote natural circulation cooling of the fuel assemblies. The VVER core is made up of hexagonal fuel assemblies which are arranged essentially close to each other in the core barrel. Fuel rods are arranged in the fuel assembly with a triangular spacing. Compacted or sintered pellets of uranium dioxide are used as nuclear fuel. One or two tubes for fuel elements remain empty to accommodate water temperature meters and heat-release sensors (see I.Ya.Emelyanov, V.I.Mikhan, V.I.Solonin et al., Designing of Nuclear Reactors, Moscow, Energoizdat, 1982, p.76).

A typical VVER-1000 core is made up of 163 hexagonal fuel assemblies having identical design and a shape close to a cylinder with equivalent height of 3.53 m and a diameter of 3.12 m. The total height of the fuel assembly is 4.66 m, with a water clearance of 2.0*10⁻³ m between the fuel assemblies. Each of the VVER-1000 fuel assemblies includes 312 fuel rods with an outer diameter of 9.1*10⁻³m and the average fuel-element linear load of 15.67 kW/m.

A typical VVER-440 core is made up of 349 hexagonal fuel assemblies of identical design. The core has a shape close to a cylinder of 2.42 m in height and 2.88 m in diameter. The total height of the fuel assembly is 3.21 m, with a minor water clearance (3*10⁻³ m) between the fuel assemblies. Each of the VVER-440 fuel assemblies includes 126 fuel rods with an outer diameter of 9.1*10⁻³ m and the average fuel element linear load of 12.82 kW/m.

The fuel elements provide a relatively high level of fuel burn-up in the core and are well-proven in operation at domestic and foreign NPPs with VVER-440 and VVER-1000 reactors. As mentioned above, the core is made up of fuel assemblies including bundles of fuel elements to render a required stiffness to the fuel rods, to facilitate assembling, reloading, transporting operations and to provide required cooling conditions. Each of the bundles is an integral unit in the fuel assembly. A number of fuel elements in the fuel assembly may be from ten pieces to several tens or even hundreds of pieces. The fuel elements in the assembly are connected together by two end grids and more than ten spacer grids mounted at a predetermined spacing along the assembly height, this providing a fixed spacing between the fuel elements for the coolant flowing over them, required clearances between the fuel elements for the coolant flow, and a required water-to-uranium ratio (see I.Ya.Emelyanov, V.I.Mikhan, V.I.Solonin et al., Designing of Nuclear Reactors, Moscow, Energoizdat, 1982, p.76-78).

A VVER fuel assembly generally consists of a bundle of fuel rods and a rack. The rack keeps together and holds the fuel elements in the assembly, also providing their spacing. The rack comprises the following components: a load-bearing rod, end grids, spacer or guide grids, longitudinal connection members, various spacers and support slides, and crimp collars. The fuel assemblies made up of fuel elements having a length matching the core length (in VVER-440 and VVER-1000 reactors) further include the following components: a top nozzle to which an upper portion the rack is attached; a bottom nozzle connected to a lower portion of the rack; a suspender, a device used to move, mount and retain the fuel assembly in a vertical channel; a shock absorber, a part for minimizing an impact load when the assembly drops on the support and compensating for vibrations occurring in the course of reactor operation; a calibration collar, a part for defining a coolant flow rate through the fuel assembly (see G.N.Ushakov, Process Channels and Fuel Elements in Nuclear Reactors, Moscow, Energoizdat, 1981, page 84-86).

To decrease a share of structural material in the core, the fuel assemblies can be made without a jacket, the so-called jacket-less fuel assemblies, in which a bundle of fuel elements is joined by spacer grids, the support grids of the assembly being connected by pipes (see I.Ya.Emelyanov, V.I.Mikhan, V.I.Solonin et al., Designing of Nuclear Reactors, Moscow, Energoizdat, 1982, page 77, Fig.3.10b). The fuel assemblies can accommodate movable controls, as it is done e.g. in a commercial VVER-1000 reactor.

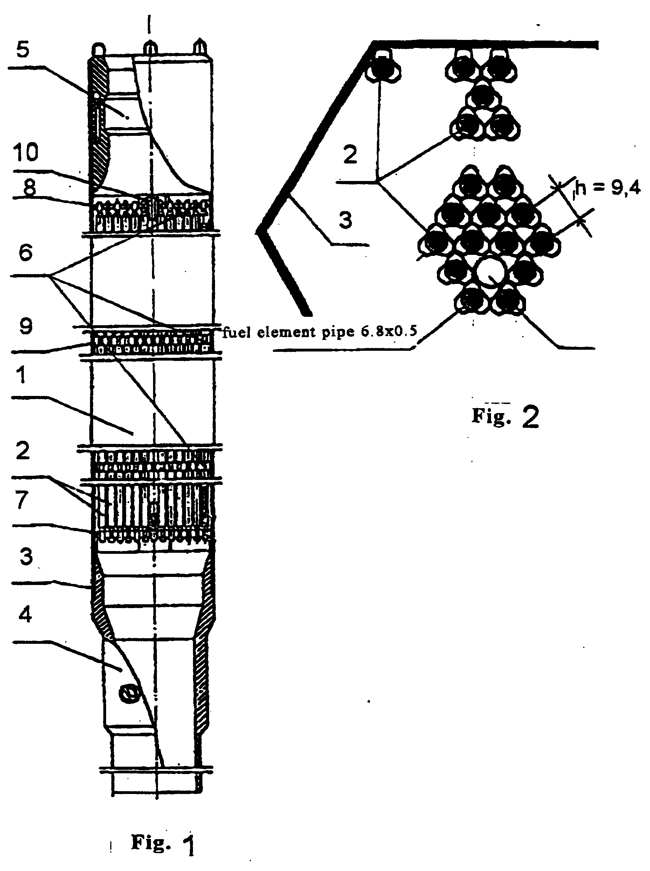

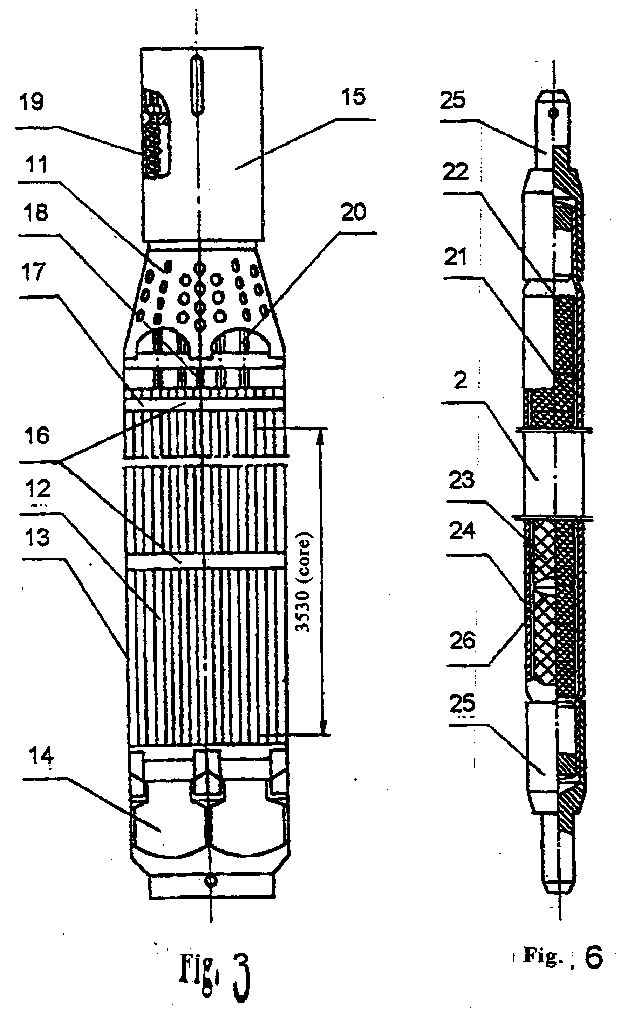

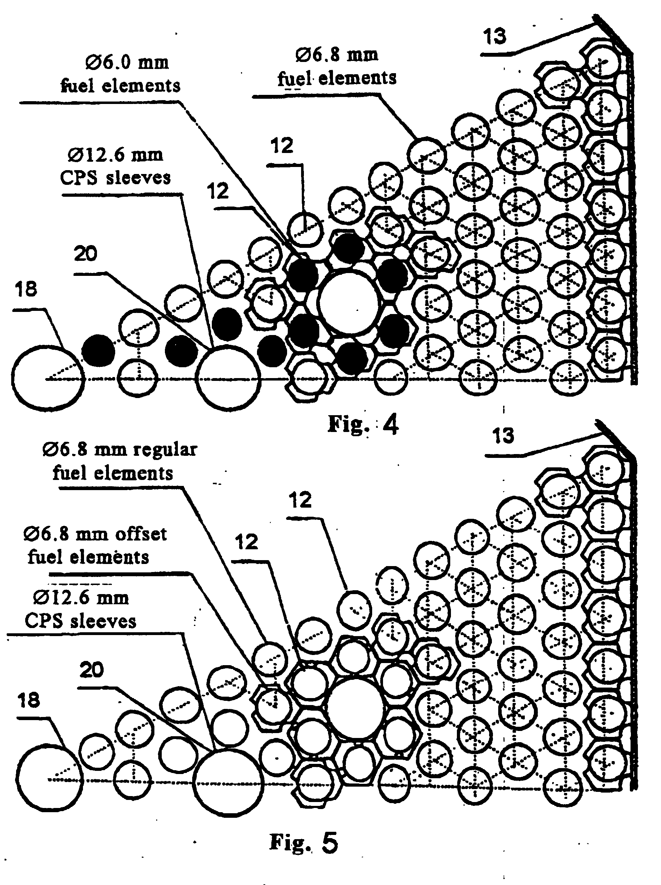

A VVER-1000 fuel assembly comprises a bundle of fuel rods, a hexagonal jacket, a bottom nozzle, a top nozzle and a rack, the latter uniting the fuel elements to the assembly. The rack includes hexagonal spacer grids which are mechanically joined together by an instrumentation tube. The instrumentation tube in the fuel assembly holds spacer grids and accommodates in-core detectors. Each of the fuel assemblies comprises 312 fuel elements with uranium dioxide pellets. To reliably hold the fuel assembly in the reactor, a top nozzle of the fuel assembly houses fifteen cylindrical screw springs. A lower grid of the top nozzle provides conditions for axisymmetric exit of the coolant from the fuel assembly. The basic load-bearing components in the assembly are springs, guide thimbles and a lower grid (see Operating Conditions in a NPP with VVER-1000 Reactor, NPP Operator's Handbook, Issue 12, Moscow, Energoatomizdat, 1992, pages 231-233, Figs.4.3 and 4.4).

A VVER-440 fuel assembly comprises a bundle of fuel rods, a hexagonal jacket, a cylinder bottom nozzle, a top nozzle and a rack, the latter securing fuel elements in the assembly. The rack includes hexagonal spacer grids (a lower support grid, an upper and middle guide grids of stainless steel or zirconium alloy) which are mechanically joined together by a zirconium alloy instrumentation tube of. Lower ends of the fuel elements are rigidly secured in the support grid, while upper ends of the fuel elements are longitudinally displaceable in the guide grid to accommodate thermal expansion. The lower support grid is attached to the cylindrical bottom nozzle, while the upper guide grid is connected to the top nozzle. With the aid of the bottom nozzle and the top nozzle the fuel assembly is mounted within the reactor vessel (see G.N.Ushakov, Process Channels and Fuel Elements in Nuclear Reactors, Moscow, Energoizdat, 1981, page 89, Fig.2.8a).

As mentioned above, fuel rods have received wide acceptance in contemporary nuclear reactors. A fuel rod comprises a nuclear fuel core made up of separate pellets or cylindrical pins located within a cladding which is a load-bearing structural member (see A.G.Samoilov, Fuel Elements in Nuclear Reactors, Moscow, Energoizdat, 1985, pages 99-107). Such fuel elements are, for example, employed in VVER-440 and VVER-1000 units.

In order to maximize a heat exchange surface and minimize heat stresses caused by a temperature gradient, a diameter of fuel rods is made as small as possible and varies in actual pressurized-water reactors in the range from 7.35*10⁻³m to 15*10⁻³m (see G.N.Ushakov, Process Channels and Fuel Elements in Nuclear Reactors, Moscow, Energoizdat, 1981, pages 32-36). With increase in the required energy stress value or in order to improve operation safety at a given load in view of restrictions on the permitted fuel temperature and heat release, nuclear designers are trying to increase a fuel element surface-to-volume ratio which provides the reduction in the heat flow owing to increased surface. Specific linear heat loads on fuel elements can be minimized through the use of fuel elements with a decreased diameter.

Conventional designs of fuel bars (fuel rods of a large length made integral throughout the core height) and fuel wires (with a diameter less than 3*10⁻³ m) ensure the reduction in the fuel element linear heat load. For example, fuel bars comprising a nuclear fuel core of metallic uranium has a diameter of 6.3*10⁻³ m, a length of 3.9 m and a maximum operational temperature of 500°C. The fuel bars are applied in heavy water gas-cooled reactors, for example, in a KC-150 reactor (see G.N.Ushakov, Process Channels and Fuel Elements in Nuclear Reactors, Moscow, Energoizdat, 1981, pages 40-43). Fuel wires are simple in design and easy to fabricate, however, the coolant must flow over them in lateral direction. Besides, such fuel elements have not found practical application yet (see G.N.Ushakov, Process Channels Fuel Elements in Nuclear Reactors, Moscow, Energoizdat, 1981, page 42).

Structures of VVER fuel elements, fuel assemblies and the core per se must provide mechanical stability and strength of fuel elements, also in high-temperature emergency state, this being complicated by the presence of powerful neutron and gamma-radiation fluxes. Damage to a fuel element results in radioactive contamination of the circuit by fission products. Impaired initial fuel element geometry can aggravate fuel element-to-coolant heat transfer conditions. Therefore, when designing a core and/or a fuel assembly, nuclear designers have to primarily account for the possibility of increasing the ratio of heat transfer surface to active volume occupied by nuclear fuel.

Most closely approaching the present invention in respect of VVER reactors are the following prior arts:
a water-moderated power reactor core comprising fuel assemblies made up of fuel rods (see I.Ya.Emelyanov, V.I.Mikhan, V.I.Solonin et al., Designing of Nuclear Reactors, Moscow, Energoizdat, 1982, pages 61, 76, Fig.3.10a);
a water-moderated power reactor fuel assembly comprising a rack and a bundle of fuel rods with nuclear fuel, such as uranium dioxide, enclosed in a cladding tube (G.N.Ushakov, Process Channels and Fuel Elements in Nuclear Reactors, Moscow, Energoizdat, 1981, page 89, Fig.2.8a);
a water-moderated power reactor fuel element comprising a nuclear fuel core located within a cylindrical cladding (G.N.Ushakov, Process Channels and Fuel Elements in Nuclear Reactors, Moscow, Energoizdat, 1981, pages 8-31).

In the conventional VVER core, a fuel rod (with 9.1*10⁻³ m outer diameter of a cladding) in a commercial fuel assembly provides a relatively high level of fuel burn-up and is well-proven in operation at domestic and foreign NPPs with VVER-440 and VVER-1000 units. However, it should be noted that in the case of cladding overheating occurring when the cooling conditions change, the fuel elements can lose tightness and even be ruptured. The point is that the low heat conductivity of the oxide fuel employed in VVER reactors causes a high temperature of fuel under normal operation conditions, a relatively great amount of accumulated heat and, as a consequence, in a NPP's blackout accident and in a loss-of-coolant accident this leads to a substantial heating of fuel element claddings in first few seconds.

When using the conventional fuel assemblies, temperatures achieved in loss-of-coolant accidents depend to a great extent on the initial liner heat loads on fuel elements. At a great leak from the VVER-1000 primary coolant circuit, the fuel elements experiencing a maximum heat load of 44.8 kW/m have a rated cladding temperature of 875°C by the fifth second, while at a great leak from the VVER-440 primary coolant system, the fuel elements experiencing a maximum heat load have a rated cladding temperature of 857°C by the fifth second. At the same time, fuel elements experiencing a linear heat load close to a medium one are heated to 550-600°C under the same conditions.

Experiments and computations provide evidences that to prevent the possibility for the fuel elements to lose tightness in the loss-of-coolant accidents, ultimate cladding temperatures should not exceed 700-750°C. Consequently, if maximum linear heat loads in the VVER core are reduced to a medium level, the potential heating of fuel element claddings would not exceed the above limiting temperature level. This, in principle, solves the problem of possible unsealing of fuel elements at the initial stage of a loss-of-coolant accident, as well the problem of melting the fuel assembly and the core at the beyond design accidents. The problem is particularly dramatized at the increased depth of fuel burn-up when the working capacity of fuel elements is close to a maximum permissible one even in normal operation conditions.

From the above discussion it appears that to improve the level of safety of operating NPPs with VVER reactors and those under development, it is desirable to upgrade a core and fuel assemblies, and to provide container-type fuel rods with a reduced diameter (provided the reactor's thermal rating is maintained close to that of a commercial VVER reactor and a water-to-uranium ratio of the fuel grid is retained close to that of a typical core) which would principally solve the problem of possible unsealing of fuel elements at the NPP's loss-of-coolant and/or blackout accident. Further, when designing an upgraded core, improved fuel assemblies and fuel elements, the critical parameters must be selected so that so that to retain, as much as possible, designs of fuel assemblied, core and nuclear power plant, and to provide neutron-physical and thermal-hydraulic characteristics close to the typical characteristics of the VVER core, since the present invention is not aimed at creation of a principally new reactor.

This approach imposes certain restrictions on the selection of critical parameters of the upgraded core, improved fuel assemblies and fuel elements, which dictate the following prerequisites:
the improved fuel assembly for the upgraded core should have a finished size and a height, as well as a design, similar to those of the conventional VVER fuel assembly;
the number of fuel elements with a reduced diameter should provide the reduction in maximum linear heat loads on fuel elements in the upgraded core fuel assembly to the level of medium loads on the fuel elements in the conventional VVER core;
the modification in the specific fuel charge value in the upgraded core fuel assembly for a reactor with a thermal capacity constituting from 83% to 124% of the VVER-440 thermal rating should not exceed 11%, while in a reactor with a thermal capacity constituting from 86% to 130% of the VVER-1000 thermal rating, the modification in the specific fuel charge value should not exceed 21%;
the increase in the hydraulic friction loss (no more than 20%) in the updated core, as compared to the conventional core design, should not exceed the existing pressure head margin of the VVER main circulation pumps;
a number, diameter and arrangement of components of the protective and control system in the upgraded core should be similar to those in the conventional VVER core.

### SUMMARY OF THE INVENTION

It is an object of the present invention to provide a novel VVER-1000 core which exhibits an enhanced working capacity both in normal operation conditions and in emergency state at improved safety, or a significantly increased working capacity at the same level of safety.

The achievement of the above object offers new technical results, including the possibility for extending the range of reactor power maneuvering, improved fuel use, enhanced burn-up of nuclear fuel and minimized likelihood of unsealing, rupture and melting of fuel elements, fuel assemblies and the core. Further, the possibility is offered to extend the reactor vessel life owing to the reduction in the neutron fluence on the vessel.

The aforementioned technical results can be attained in a water-moderated power reactor core comprising fuel assemblies formed from fuel rods, wherein at least one of the fuel assemblies comprises from 250 to 270 fuel rods, each having a cladding with an outer diameter in the range from 5.85*10⁻³ m to 6.17*10⁻³ m and an inner diameter in the range from 5.01*10⁻³m to 5.23*10⁻³ m, or from 196 to 216 fuel rods, each having a cladding with an outer diameter in the range from 6.66*10⁻³ m to 6.99*10⁻³ m and an inner diameter in the range from 5.68*10⁻³ m to 5.95*10⁻³ m, provided a water-to-uranium ratio is from 1.6 to 2.0 for a reactor with 1150 to 1700 MW thermal rating, or the fuel assembly comprises from 498 to 648 fuel rods, each having a cladding with an outer diameter in the range from 5.85*10⁻³ m to 6.17*10⁻³ m and/or from 6.66*10⁻³ m to 6.99*10⁻³ m, and an inner diameter in the range from 5.0*10⁻³ m to 5.22*10⁻³ m and/or from 5.67*10⁻³ m to 5.93*10⁻³m, respectively, provided a water-to-uranium ratio is from 2.01 to 2.74, for a reactor with 2600 to 3900 MW thermal rating.

To this end, in a water-moderated power reactor fuel assembly comprising a rack and a bundle of fuel rods with nuclear fuel, such as uranium dioxide, enclosed in a cladding, the bundle comprises from 250 to 270 fuel rods, each having a cladding with an outer diameter from 5.85*10⁻³m to 6.17*10⁻³ m and an inner diameter from 5.01*10⁻³ m to 5.23*10⁻³ m, or from 196 to 216 fuel rods, each having a cladding with an outer diameter from 6.66*10⁻³ m to 6.99*10⁻³ m and an inner diameter from 5.68*10⁻³ m to 5.95*10⁻³ m, a weight of uranium dioxide in the bundle being in the range from 103.6 kg to 142.1 kg for a reactor with 1150 to 1700 MW thermal rating, or the bundle comprises from 498 to 648 fuel rods, each having a cladding with an outer diameter from 5.85*10⁻³ m to 6.17*10⁻³ m and an inner diameter from 5.0*10⁻³ m to 5.22*10⁻³ m, respectively, and/or with an outer diameter from 6.66*10⁻³ m to 6.99*10⁻³ m and an inner diameter from 5.67*10⁻³ to 5.93*10⁻³ m, respectively, a weight of uranium dioxide in the bundle being in the range from 377.4 kg to 505.8 kg for a reactor with 2600 to 3900 MW thermal rating.

Respectively, in a water-moderated power reactor fuel element comprising a nuclear fuel core located within in a cylindrical cladding, an outer diameter of the cladding is from 5.85*10⁻³ m to 6.99*10⁻³ m, the nuclear fuel core has a diameter in the range from 4.90*10⁻³ m to 5.75*10⁻³ m and a weight in the range from 0.42 kg to 0.66 kg for a reactor with 1150 to 1700 MW thermal rating, or an outer diameter of the cladding is in the range from 5.85*10⁻³ m to 6.99*10⁻³ m, the nuclear fuel core has a diameter from 4.88*10⁻³ m to 5.74*10⁻³ m and a weight from 0.62 kg to 0.96 kg for a reactor with 2600 to 3900 MW thermal rating.

The distinctive feature of the invented water-moderated power reactor core is that at least one of the fuel assemblies comprises from 250 to 270 fuel rods, each having a cladding with an outer diameter from 5.85*10⁻³ m to 6.17*10⁻³ m and an inner diameter from 5.01*10⁻³ m to 5.23*10⁻³ m, or from 196 to 216 fuel rods, each having a cladding with an outer diameter from 6.66*10⁻³ m to 6.99*10⁻³ m and an inner diameter from 5.68*10⁻³ m to 5.95*10⁻³ m, provided a water-to-uranium ratio is from 1.6 to 2.0 for a reactor with 1150 to 1700 MW thermal rating, or the fuel assembly comprises from 498 to 648 fuel rods, each having a cladding with an outer diameter from 5.85*10⁻³ m to 6.17*10⁻³ m and/or from 6.66*10⁻³ m to 6.99*10⁻³ m and an inner diameter from 5.0*10⁻³ m to 5.22*10⁻³ m, and/or from 5.67*10⁻³ m to 5.93*10⁻³ m, respectively, provided a water-to-uranium ratio is from 2.01 to 2.74 for a reactor with 2600 to 3900 MW thermal rating.

The distinctive feature of the invented water-moderated power reactor fuel assembly is that the bundle comprises from 250 to 270 fuel rods, each having a cladding with an outer diameter from 5.85*10⁻³ m to 6.17*10⁻³ m and an inner diameter from 5.01*10⁻³ m to 5.23*10⁻³ m, or from 196 to 216 fuel rods, each having a cladding with an outer diameter from 6.66*10⁻³ m to 6.99*10⁻³ m and an inner diameter from 5.68*10⁻³ m to 5.95*10⁻³ m, a weight of uranium dioxide in the bundle being in the range from 103.6 kg to 142.1 kg for a reactor with 1150 to 1700 MW thermal rating, or the bundle comprises from 498 to 648 fuel rods, each having a cladding with an outer diameter from 5.85*10⁻³ m to 6.17*10⁻³ m and an inner diameter from 5.0*10⁻³m to 5.22*10⁻³ m, respectively, and/or with an outer diameter from 6.66*10⁻³m to 6.99*10⁻³ m and an inner diameter from 5.67*10⁻³ m to 5.93*10⁻³ m, respectively, a weight of uranium dioxide in the bundle being in the range from 377.4 to 505.8 kg in a reactor with 2600 to 3900 MW thermal rating.

The distinctive feature of the invented water-moderated power reactor fuel element is that an outer diameter of the cladding is in the range from 5.85*10⁻³ m to 6.99*10⁻³ m, the nuclear fuel core has a diameter in the range from 4.90*10⁻³ m to 5.75*10⁻³ m and a weight from 0.42 kg to 0.66 kg for a reactor with 1150 to 1700 MW thermal rating, or an outer diameter of the cladding is in the range from 5.85*10⁻³ m to 6.99*10⁻³ m, the nuclear fuel core has a diameter from 4.88*10⁻³ m to 5.74*10⁻³ m and a weight from 0.62 kg to 0.96 kg for a reactor with 2600 to 3900 MW thermal rating.

The present inventions are based on a new approach towards a water-moderated reactor core which exhibits the improved working capacity both in normal operating conditions and in emergency state, this resulting from the following factors. Since the updated core, like a typical water-moderated reactor core, is made up of hexagonal fuel assemblies having a finished size, height and design of the rack holding the bundle of the disclosed fuel rods in the fuel assembly, which are identical to those of a typical fuel assembly, and the fuel elements having the aforementioned dimensions and characteristics can fit into overall dimensions of typical fuel assemblies, the aforementioned distinctions result in that the average linear heat load on the disclosed fuel elements in the improved fuel assemblies of the improved core decreases, for example, by a factor of 1.71-2.13 in a VVER-440 reactor, and 1.65-1.91 in a VVER-1000 reactor, provided the reactor's thermal rating is maintained and neutron-physical and thermal-hydraulic characteristics are close to the typical reactor characteristics.

The updated water-moderated power reactor core can advantageously comprise a fuel assembly made up of 270 fuel rods, each having a cladding with an outer diameter from 5.97*10⁻³ m to 6.07*10⁻³ m and an inner diameter from 5.09*10⁻³ m to 5.14*10⁻³ m, provided a water-to-uranium ratio is from 1.8 to 1.9, or a fuel assembly made up of 216 fuel rods, each having a cladding with an outer diameter from 6.76*10⁻³m to 6.88*10⁻³ m and an inner diameter from 5.77*10⁻³ m to 5.83*10⁻³ m, provided a water-to-uranium ratio is from 1.7 to 1.8 for a reactor with 1375 MW thermal rating.

Another embodiment of the updated water-moderated power reactor core can advantageously comprise a fuel assembly made up of 648 fuel rods, each having a cladding with an outer diameter from 5.97*10⁻³ m to 6.07*10⁻³ m and an inner diameter from 5.08*10⁻³ m to 5.14*10⁻³ m, provided a water-to-uranium ratio is from 2.5 to 2.6, or a fuel assembly made up of 528 fuel rods, each having a cladding with an outer diameter from 6.76*10⁻³ m to 6.88*10⁻³ m and an inner diameter from 5.76*10⁻³ m to 5.83*10⁻³ m, provided a water-to-uranium ratio is from 2.1 to 2.2 for a reactor with 3000 MW thermal rating.

An embodiment of the updated water-moderated power reactor core can advantageously comprise a fuel assembly made up of 114 fuel rods, each having a cladding with an outer and inner diameter from 5.97*10⁻³ m to 6.07*10⁻³ m and from 5.8*10⁻³ m to 5.14*10⁻³ m, respectively, and 414 fuel rods, each having a cladding with an outer and inner diameter from 6.76*10⁻³ m to 6.88*10⁻³ m and from 5.76*10⁻³ m to 5.83*10⁻³ m, respectively, provided a water-to-uranium ratio is from 2.1 to 2.6 for a reactor with 3000 MW thermal rating.

In further embodiment of the improved water-moderated power reactor fuel assembly for a 1375 MW reactor, a weight of uranium dioxide in the assembly is in the range from 129.6 kg to 134.5 kg, an outer and inner diameters of the cladding are in the range from 5.97*10⁻³m to 6.07*10⁻³ m and from 5.09*10⁻³ m to 5.14*10⁻³ m, respectively, for a bundle of 270 fuel elements, or a weight of uranium dioxide in the assembly is in the range from 133.1 kg to 138.0 kg, an outer and inner diameters of the cladding are in the range from 6.76*10⁻³ m to 6.88*10⁻³ m and from 5.77*10⁻³ m to 5.83*10⁻³ m, respectively, for a bundle of 216 fuel elements.

In an embodiment of the improved fuel assembly for a reactor with 3000 MW thermal rating, the bundle comprises 648 fuel elements, each having a cladding with an outer and inner diameter from 5.97*10⁻³ m to 6.07*10⁻³ m and from 5.08*10⁻³ m to 5.14*10⁻³ m, respectively, a weight of uranium dioxide in the bundle being in the range from 450.5 kg to 467.2 kg, or 528 fuel elements, each having a cladding with an outer and inner diameter from 6.76*10⁻³ m to 6.88*10⁻³ m and from 5.76*10⁻³ m to 5.83*10⁻³ m, respectively, a weight of uranium dioxide in the bundle being in the range from 471.2 kg to 491.7 kg.

In further embodiment of the improved fuel assembly for a reactor with 3000 MW thermal rating, the bundle comprises 114 fuel elements, each having a cladding with an outer and inner diameter from 5.97*10⁻³ m to 6.07*10⁻³ m, and from 5.08*10⁻³ m to 5.14*10⁻³ m, respectively, and 414 fuel elements, each having a cladding with an outer and inner diameter from 6.76*10⁻³ m to 6.88*10⁻³ m and from 5.76*10⁻³ m to 5.83*10⁻³ m, respectively, a weight of uranium dioxide in the bundle being in the range from 448.7 kg to 467.8 kg.

In the improved water-moderated power reactor fuel assembly, the nuclear fuel is preferably in the form of pellets with an average density of uranium dioxide from 10.4*10³ kg/m³ to 10.7*10³ kg/m³.

An embodiment of a water-moderated power reactor fuel element preferably has a cladding with an outer diameter from 5.85*10⁻³ m to 6.17*10⁻³ m, a nuclear fuel core with a diameter from 4.90*10⁻³ m to 5.08*10⁻³ m and a weight in the range from 0.46 kg to 0.51 kg, or a cladding with an outer diameter from 6.66*10⁻³ m to 6.99*10⁻³ m, a nuclear fuel core with a diameter from 5.55*10⁻³ m to 5.75*10⁻³ m and a weight in the range from 0.60 to 0.66 kg for a reactor with 1150 to 1700 MW thermal rating, or a cladding with an outer diameter from 5.85*10⁻³m to 6.17*10⁻³ m, a nuclear fuel core with a diameter from 4.88*10⁻³ m to 5.07*10⁻³ m and a weight in the range from 0.67 kg to 0.75 kg, or a cladding with an outer diameter from 6.66*10⁻³ m to 6.99*10⁻³ m, a nuclear fuel core with a diameter from 5.53*10⁻³ m to 5.74*10⁻³ m and a weight in the range from 0.86 kg to 0.96 kg for a reactor with 2600 to 3900 MW thermal rating.

An embodiment of the disclosed fuel element in a water-moderated power reactor can preferably have a cladding with an inner diameter from 5.01*10⁻³ m to 5.95*10⁻³ m for a reactor with 1150 to 1700 MW thermal rating, or an inner diameter from 5.0*10⁻³ m to 5.93*10⁻³ m for a reactor with 2600 to 3900 MW thermal rating.

Another embodiment of the invented fuel element for a water-moderated reactor with 1375 MW thermal rating has a cladding with an outer and inner diameter from 6.76*10⁻³ m to 6.88*10⁻³ m, and from 5.77*10⁻³ m to 5.83*10⁻³ m, respectively, a nuclear fuel core with a diameter from 5.64*10⁻³ m to 5.67*10⁻³ m and a weight in the range from 0.62 kg to 0.64 kg, or a cladding with an outer and inner diameter from 5.97*10⁻³ m to 6.07*10⁻³ m, and from 5.09*10⁻³ m to 5.14*10⁻³ m, respectively, a nuclear fuel core with a diameter from 4.98*10⁻³ m to 4.99*10⁻³ m and a weight in the range from 0.48 kg to 0.5 kg.

Still further embodiment of the disclosed fuel element for a water-moderated reactor with 3000 MW thermal rating has a cladding with an outer and inner diameters from 6.76*10⁻³ m to 6.88*10⁻³ m and from 5.76*10⁻³ m to 5.83*10⁻³ m, respectively, a nuclear fuel core with a diameter from 5.62*10⁻³ m to 5.66*10⁻³ m and a weight in the range from 0.89 kg to 0.93 kg, or a cladding with an outer and inner diameter from 5.97*10⁻³ m to 6.07*10⁻³ m and from 5.08*10⁻³ m to 5.14*10⁻³ m, respectively, a nuclear fuel core with a diameter from 4.96*10⁻³ m to 4.98*10⁻³ m and a weight in the range from 0.69 kg to 0.72 kg.

It should be emphasized that the aforementioned object and new technical results, such as the possibility for extending the range of reactor power maneuvering, the enhancement of nuclear fuel burn-up and the minimization of the likelihood of fuel element unsealing in water-moderated nuclear reactors, can be provided only by the listed above combinations of technical features.

Actually, as mentioned before, conventional fuel elements may have an outer cladding diameter of 6.3*10⁻³ m, this feature, however, is insufficient for attaining the above object. Failure to provide at least one of the essential features recited in the independent claims, will prohibit the attainment of the object of the invention and the provision of the new technical results. By way of example, if the feature of a water-to-uranium ratio is not observed, this will result in violation of the principle of selecting main geometrical parameters of the fuel grid in the upgraded core, which should meet the prerequisite that the core design and main neutron-physical and thermal-hydraulic characteristics must be retained close to those of the typical VVER-1000 core. Failure to observe the reactor power range will result in that
first, if the VVER'S thermal rating range is greater than the disclosed one, the cladding integrity will suffer at a maximum design accident;
second, if the reactor's thermal rating is lower than the disclosed one (the other main dimensional, thermal and neutron-physical characteristics of the reactor being unchanged relative to the typical VVER characteristics), the elaboration and/or operation of such reactors will be cost-ineffective.

Further, the new technical results will be not attained if only an outer diameter of the fuel element cladding is selected when designing a fuel assembly, without the indication of the required ranges of inner diameters of the cladding, outer diameters of the fuel elements, respective fuel weight, and their relations (defined by the combinations of particular values included therein). Moreover, if a fuel (uranium dioxide) weight value is neglected, the combinations of values making up the disclosed pairs of the outer and inner diameter ranges of fuel element will lead to a probable nonobservance of the permissible modification in the water-to-uranium ratio of fuel grid of the fuel assembly, which provides the principal attainment of the object of the invention (provided the reactor power is retained).

Further, it should be noted that in improving the fuel element design, the selection of a single value of an outer diameter of the cladding without indication of the required ranges of nuclear fuel core diameter, weight and their relation (defined by the combination of particular values included therein) does not allow the creation of a fuel element which provides new technical results, insofar as merely the combination of values making up the disclosed ranges of an outer diameter of the cladding, a nuclear fuel core diameter, without the selection of a fuel (uranium dioxide) weight value of the nuclear fuel core, leads to a probable noncompliance with a permissible modification of a water-to-uranium ratio value of the fuel grid.

To fabricate the reactor core having the aforementioned essential features, the designer of the updated core should specify the outer and inner diameters of the cladding from the disclosed ranges, and then define, using simple calculations, a water-to uranium ratio taking into account the aforementioned requirements. In the case the obtained water-to-uranium ratio value does not correspond to the claimed range of values, the initially specified data should be modified and calculations of the water-to-uranium ratio repeated.

### Brief Description of Drawings

Fig.1 is an elevational view, in cross section, of an embodiment of VVER-440 fuel assembly in accordance with the present invention;
Fig.2 is a cross sectional structural view of a VVER-1000 fuel assembly in accordance with the present invention;
Fig.3 is an elevational view, in cross section, of an embodiment of a VVER-1000 fuel assembly in accordance with the present invention;
Fig.4 is a cross sectional structural view of a VVER-1000 fuel assembly formed of fuel elements of two dimensions, in accordance with the present invention;
Fig.5 is a cross sectional structural view of a VVER-1000 fuel assembly formed of fuel elements of the same diameter, in accordance with the present invention;
Fig.6 is an elevational view, in cross section, of a VVER-440 fuel element in accordance with the present invention;
Fig.7 is an elevational view, in cross section, of a VVER-1000 fuel element in accordance with the present invention;
Fig.8 shows curves defining the variation in a maximum temperature of a maximum energy-stressed fuel element cladding in a conventional and updated VVER-440 core at the Dᵢₙ500mm-piping break accident;
Fig.9 shows curves defining the variation in a maximum temperature of a maximum energy-stressed fuel element cladding in a conventional and updated VVER-1000 core at the Dᵢₙ850mm-piping break accident;
Fig.10 shows curves defining the variation in a maximum temperature of a medium-stressed fuel element cladding in a conventional and improved VVER-1000 core at the Dᵢₙ850mm-piping break accident;
Fig. 11 shows variations in the ultimate strength and stresses in a fuel element cladding of a conventional VVER-440 core at the Dᵢₙ500mm-piping break accident;
Fig.12 shows variations in the ultimate strength and stresses in a fuel element cladding of the improved VVER-440 core at the Dᵢₙ500mm-piping break accident;
Fig.13 shows curves defining a maximum temperature of a cladding of a maximum energy-stressed fuel element in a conventional the updated VVER-1000 core at the reactor blackout accident;
Fig.14 shows curves defining a maximum temperature of a cladding of a medium-stressed fuel element in a conventional and updated VVER-1000 core at the reactor blackout accident;
Fig.15 shows curves defining a relation between the ultimate strength and stresses in a cladding of a maximum-stressed fuel element in the updated VVER-1000 core;
Fig.16 shows curves defining a relation between the ultimate strength and stresses in a cladding of a maximum stressed fuel element in a conventional VVER-1000 core.

### Description of Preferred Embodiments

An updated core for a water-moderated power reactor is made up of hexagonal fuel assemblies whose design and overall dimensions (finished size and height) are similar to those of typical fuel assemblies of water-moderated power reactors. In the following description, the authors shall take a close look at improvements in a VVER-440 reactor (with 1375 megawatt thermal rating) and a VVER-1000 reactor (with 3000 megawatt thermal rating).

The updated core disclosed hereinafter, for example, for use in a commercial VVER-440 reactor, may have a thermal rating from 1150 to 1700 megawatt (MW) and is made up of 349 improved hexagonal fuel assemblies 1 whose overall dimensions (a finished size of 144*10⁻³ m and a height of 2.42 m) are similar to those of typical fuel assemblies in a commercial VVER-440 reactor. At least one of the 349 fuel assemblies in the updated core has a structure as shown in Figures 1 and 2. The updated fuel assembly 1 (with 3.3 to 4.9 MW thermal capacity) in the disclosed core includes a bundle of improved fuel rods 2 (with 11.3 to 22.6 kW thermal capacity), a hexagonal jacket 3, a cylindrical bottom nozzle 4, a top nozzle 5 and a rack 6 of the assembly 6 to hold the fuel elements 2 in the fuel assembly. The rack 6 of the assembly 1 includes hexagonal spacer grids (a bottom support grid 7 and a top and middle guide grids 8 and 9 made of stainless steel or a zirconium alloy), the grids being mechanically joined together by a zirconium alloy instrumentation tube 10. Lower ends of fuel elements 2 are fixed in the support grid 7, while upper ends thereof are lengthwise displaceable in the guiding grid 9 to accommodate thermal expansion. The bottom support grid 7 is secured to the cylindrical bottom nozzle 4 of the assembly, while the top guiding grid is attached to the top nozzle 5, respectively. With the aid of the bottom and top nozzles 4 and 5, the assembly is mounted in a core barrel (see Fig.1). The fuel assembly (with 3.94 MW thermal capacity) in the updated VVER-440 reactor core (with 1375 MW thermal capacity) includes from 250 to 270 fuel rods (with a 13.5 to 14.6 kilowatts (kW) thermal capacity) having an outer cladding diameter from 5.85*10⁻³ m to 6.17*10⁻³ m, or from 196 to 216 fuel elements (with 16.5 to 18.2 kW thermal capacity) having an outer cladding diameter from 6.66*10⁻³ m to 6.99*10⁻³ m (and having a medium fuel-element linear load from 5.6 to 7.52 kW/m) at a water-to-uranium ratio from 1.6 to 2.0.

The updated core disclosed below, for example, intended for a commercial VVER-1000 reactor, may have 2600 to 3900 MW thermal rating and is made up of 163 improved hexagonal fuel assemblies 11 whose overall dimensions (a finished size of 234*10⁻³ m and a height of 2.53 m) are similar to those of typical fuel assemblies in a commercial VVER-1000 reactor. At least one of the 163 fuel assemblies in the updated core has a structure as shown in Fig.3. The updated fuel assembly 11 (with 16 to 24 MW thermal capacity) in the disclosed core includes a bundle of invented fuel rods 12 (with 23.2 to 45.3 kW thermal capacity), a hexagonal jacket 13, a bottom nozzle 14, a top nozzle 15 and a rack 16 of the assembly 11 to hold the fuel elements 12 in the fuel assembly. The rack 16 of the assembly 11 includes hexagonal spacer grids 17 (14 spacer grids in the assembly within the core), the grids being mechanically kept together by an instrumentation tube 18. The instrumentation tube 18 in the fuel assembly serves to hold the spacer grids 17 and to accommodate in-core detectors. The instrumentation tube is made of a zirconium alloy of size (10.3x0.65)*10⁻³ m. Through the bottom and top nozzles 14 and 15, the assembly is mounted within a core barrel (see Fig.3). To reliably fix the fuel assembly in the reactor, the top nozzle 15 houses fifteen coiled screw springs 19. The lower grid of the top nozzle 15 provides conditions for axisymmetric release of the coolant from the fuel assembly. The parts which take main mechanical loads on the fuel assembly are the springs 19, guide thimbles 20 (eighteen steel tubes of size (12.6x0.8)*10⁻³ m to accommodate absorbers) and the lower grid (see Figs.4 and 5). The fuel assembly (with 18.4 MW thermal capacity) in the described VVER-1000 reactor core (with 3,000 MW thermal capacity) includes from 498 fuel rods (with 32.9 kW thermal capacity) to 648 fuel rods (with 28.4 kW thermal capacity) having an outer fuel element diameter from 5.85*10⁻³ m to 6.17*10⁻³ m and/or from 6.66*10⁻³ m to 6.99*10⁻³ m, and having an average fuel element linear load from 8.0 to 9.3 kW/m. A water-to-uranium ratio is in the range from 2.01 to 2.74.

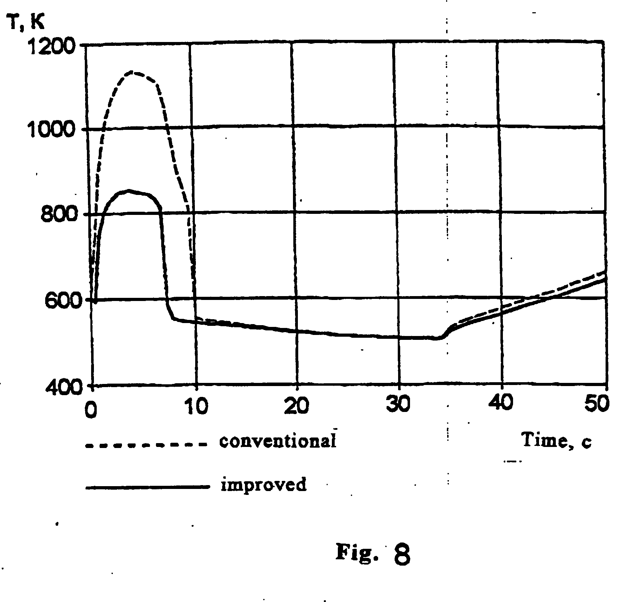

The improved fuel element 2 in the updated VVER-440 reactor includes a nuclear fuel core 21 containing separate nuclear fuel pellets 22 or cylindrical pins 23 located in a cladding 24 which is a structural load-bearing member to which end parts 25 are attached (see Fig.6). In operation, the cladding 24 is subjected to strains caused by fuel expansion and swelling and by gas emitted from the fuel, especially at locations corresponding to pellet or pin interfaces. The above negative factors are alleviated through shaping the pellets 22 or pins 23, in particular, through making their end faces 26 concave (see Fig.6) or with a conical side surface in the end face region (not shown).

- The most preferable material for the pellets 22 is compacted sintered uranium dioxide with a density from 10.4*10⁻³ to 10.7*10⁻³kg/m³, although thorium oxide and uranium carbides can be used as well. A weight of uranium dioxide in the updated VVER-440 reactor fuel assembly is from 103.6 kg to 142.1 kg. A weight of uranium in the improved VVER-440 reactor fuel elements is from 0.37 to 0.58 kg.

When selecting a thickness of a cladding for the disclosed VVER-440 reactor fuel element it is preferable to maintain the same cladding thickness-to-fuel element outer diameter ratio as in typical VVER-440 reactor fuel elements, this ensuring the cladding stability no less than in conventional fuel elements, provided the helium pressure value is maintained at 0.2 to 0.7 MPa. Further, it should be taken into account that a radial clearance between the nuclear fuel core 21 and the cladding 24 in the invented fuel elements must be no less than 0.05*10⁻³ m (see Fig.6). This prerequisite is caused by process problems inherent in assembling fuel elements.

Due to the low heat conductivity of the nuclear fuel core 21 material and in view of the aforementioned prerequisites, the cladding 24 of the improved fuel rod for a reactor with 1150 to 1700 MW thermal rating should have an outer and inner diameter from 5.85*10⁻³ m to 6.99*10⁻³ m and from 5.01*10⁻³ m to 5.95*10⁻³ m, respectively. The point is that the first two prerequisites dictate that a relative rod-to-rod spacing must provide the water-to-uranium ratio in the updated core close to the water-to-uranium ratio in the grids in operating VVER-440 reactors. Taking into account all of the prerequisites above and the results of neutron-physical, thermal-hydraulic and mechanical calculations and, primarily, results of analysis of VVER-440 reactor accidents with coolant leak from the primary-coolant system, the authors have determined the ranges of critical parameters for improved fuel elements in the updated core for a reactor with 1150 to 1700 MW thermal rating, in particular:
an outer diameter of the cladding of the described fuel element should be in the range from 5.85*10⁻³ m to 6.99*10⁻³ m;
an inner diameter of the cladding of the described fuel element should be in the range from 5.01*10⁻³ m to 5.95*10⁻³ m;
a diameter of the nuclear fuel core in the described fuel element should be in the range from 4.90*10⁻³ m to 5.75*10⁻³ m;
a weight of the nuclear fuel core in the described fuel element should be in the range from 0.42 to 0.66 kg.

Actually, making the described VVER-440 fuel element with an outer diameter less than 5.85*10⁻³ m (e.g. 5.8*10⁻³ m), and making a nuclear fuel core with a diameter and weight no more than 4.90*10⁻³ m and 0.42 kg, respectively, results in failure to observe the prerequisite relating to the possibility of modifying a relative specific fuel charge in the updated VVER-440 fuel assembly as compared to a typical VVER-440 fuel assembly (15% excess), while making a fuel element with an outer diameter greater than 6.99*10⁻³ m (e.g. 7.0*10⁻³ m) and a nuclear fuel core with a diameter and weight no less than 5.75*10⁻³ m and 0.66 kg, respectively, results in failure to observe the prerequisite relating to the possible increase in hydraulic friction loss in the invented VVER-440 fuel assembly as compared to a typical VVER-440 fuel assembly (more than 35% excess).

It should be noted that the first two prerequisites allow the determination of the most preferable ranges of critical parameters of the described fuel element in the updated core for a reactor with 1150 to 1700 MW thermal rating, in particular:
an outer diameter of the cladding of the described fuel element should be in the range from 5.85*10⁻³ m to 6.17*10⁻³ m or from 6.66*10⁻³m to 6.99*10⁻³ m;
an inner diameter of the cladding of the described fuel element should be in the range from 5.01*10⁻³ m to 5.23*10⁻³ m or from 5.68*10⁻³m 5.95*10⁻³ m;
a diameter of the nuclear fuel core in the described fuel element should be in the range from 4.90*10⁻³ m to 5.08*10⁻³ m or from 5.55*10⁻³m 5.75*10⁻³ m;
a weight of the nuclear fuel core in the described fuel element should be in the range from 0.46 to 0.51 kg or from 0.60 to 0.66 kg.

Further, from the first and the fifth prerequisites it follows that the most preferable fuel elements in the invented core for a VVER-440 reactor (with 1375 MW thermal rating) are fuel elements having the following parameters:
an outer diameter of the cladding of the described fuel element is in the range from 6.76*10⁻³ m to 6.88*10⁻³ m or from 5.97*10⁻³ m to 6.07*10⁻³ m;
an inner diameter of the cladding of the described fuel element is in the range from 5.77*10⁻³ m to 5.83*10⁻³ m or from 5.09*10⁻³ m 5.14*10⁻³m;
a diameter of the nuclear fuel core in the described fuel element is in the range from 5.64*10⁻³ m to 5.67*10⁻³ m or from 4.98*10⁻³ m to 4.99*10⁻³ m;
a weight of the nuclear fuel core in the described fuel element is in the range from 0.62 to 0.64 kg or from 0.48 to 0.5 kg.

In operation of the disclosed fuel elements, a working fluid (a primary circuit coolant) flows over the external surface of the cladding 24 of the invented VVER-440 reactor fuel element for, thereby extracting heat from the nuclear fuel core 21 (see Fig.6). The improved water-moderated reactor fuel assembly with 1150 to 1700 MW thermal rating (taking into account the above prerequisites and considerations) must have an outer and inner cladding diameter from 5.85*10⁻³ m to 6.17*10⁻³m and from 5.01*10⁻³ m to 5.23*10⁻³ m, respectively, in a bundle made up of 250-270 fuel elements, or from 6.66*10⁻³ m to 6.99*10⁻³ m and from 5.68*10⁻³ m to 5.95*10⁻³ m, respectively, in a bundle made up of 196-216 fuel elements. Listed below are the preferable ranges of critical parameters of the invented fuel assembly for the updated VVER-440 reactor (with 1375 MW thermal rating). For instance, in a bundle including 270 fuel elements:
an outer diameter of the cladding is in the range from 5.97*10⁻³ m to 6.07*10⁻³ m;
an inner diameter of the cladding is in the range from 5.09*10⁻³ m to 5.14*10⁻³ m;
a weight of uranium dioxide is in the range from 129.6 to 134.5 kg,
while in a bundle comprising 216 fuel elements:
an outer diameter of the cladding is in the range from 6.76*10⁻³ m to 6.88*10⁻³ m;
an inner diameter of the cladding is in the range from 5.77*10⁻³ m to 5.83*10⁻³ m;
a weight of uranium dioxide is in the range from 133.1 to 1385 kg.

Making a fuel element in the invented VVER-440 fuel assembly with an outer diameter less than 5.85*10⁻³ m (e.g. 5.8*10⁻³ m) and, respectively, with an inner cladding diameter no more than 5.01*10⁻³ m and a fuel weight in the fuel assembly no more than 103.6 kg results in failure to observe the prerequisite relating to the possibility for changing a relative specific fuel charge in the improved VVER-440 reactor fuel assembly as compared to a typical VVER-440 reactor fuel assembly (15% excess), while making a fuel element with an outer diameter greater than 6.99*10⁻³ m (e.g. 7.0*10⁻³ m) and, respectively, making fuel elements with an inner cladding diameter no less than 5.95*10⁻³ m and a fuel weight in the fuel assembly no less than 142.1 kg results in failure to observe the prerequisite relating to the possible increase in hydraulic friction loss in the improved VVER-440 fuel assembly as compared to a typical VVER-440 fuel assembly (more than 35% excess). On the other hand, making a fuel element in the disclosed fuel assembly with a diameter greater than 6.17*10⁻³ m (respectively, making a fuel element with an inner cladding diameter no less than 5.23*10⁻³ m and a fuel weight in the fuel assembly no less than 138.8 kg) and less than 6.66*10⁻³ m (respectively, making a fuel element with an inner cladding diameter no more than 5.68*10⁻³ m and a fuel weight in the fuel assembly no more than 129.2 kg) results in failure to provide the first two prerequisites. The point is the above prerequisites dictate that a relative rod-to-rod spacing between fuel elements in the invented assembly should provide a water-to-uranium ratio for a VVER-440 reactor no more than 1.9, i.e. close to that of the grids in operating VVER-440 reactors, while this is not so.

The jacket 3 accommodating the fuel elements 2 unites all of the disclosed fuel assembly components into an integral unit, providing a required direction of the coolant flow inside the fuel assembly between separate fuel elements 2 in the assembly and between fuel assemblies in the VVER-440 core (see Fig.1). The jacket 3 of the assembly is free from an inner coolant pressure occurring when the coolant flows through the fuel assembly. To provide a uniform coolant temperature at the fuel assembly outlet, the coolant flow rate through the assemblies is being profiled in accordance with heat release distribution across the reactor radius, using throttle collars mounted at the coolant inlet (not shown) to the fuel assembly.

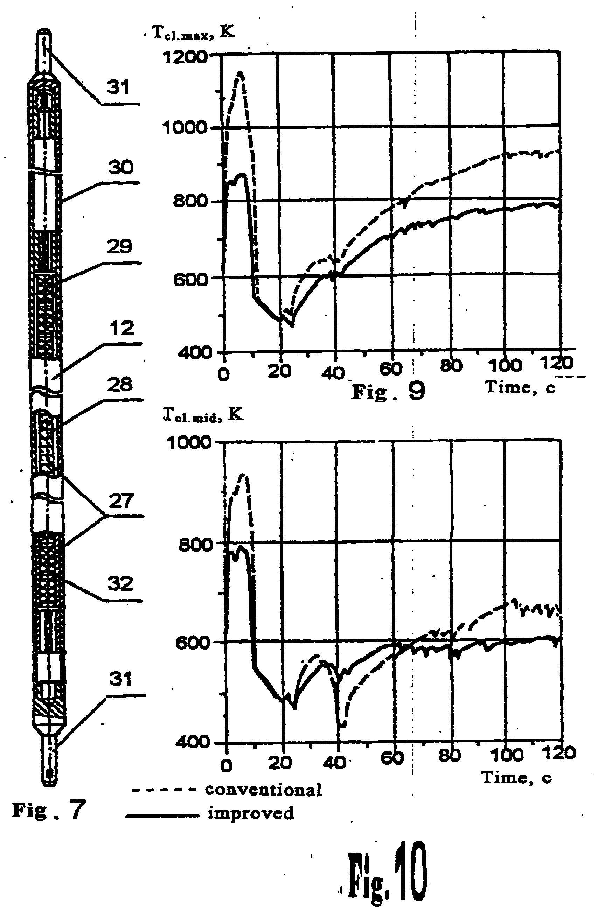

The improved VVER-1000 fuel element 12 comprises a nuclear fuel core 27 including separate nuclear fuel pellets 28 or cylindrical pins 23 located in a cladding 30 which is a load-bearing structural member to which end parts 31 are secured (see Fig.7). As mentioned above in the description of the updated VVER-440 reactor, in operation the cladding 30 is subjected to strains caused by fuel expansion and swelling and by gas emitted from the fuel, especially, at locations corresponding to pellet or pin interfaces. The above negative factors are eliminated by shaping the pellets 28 or pins 29, in particular, by making their end faces 32 concave or with a conical side surface in the end face regions (not shown).

The most preferable material for the pellets 28 is compacted sintered uranium dioxide with an average density from 10.4*10⁻³ to 10.7*10⁻³ kg/m³, although thorium oxide and uranium carbides can be used as well. A weight of uranium dioxide in the updated VVER-1000 fuel assembly is from 377.4 to 505.8 kg. A weight of uranium in the improved VVER-1000 fuel elements is from 0.54 to 0.84 kg.

Like the updated VVER-440 reactor, in selection of a thickness of a cladding of the disclosed VVER-1000 fuel element it is preferable to maintain the same cladding thickness-to-outer fuel element diameter ratio as in typical VVER-1000 fuel elements, this ensuring the cladding stability no less than in typical fuel elements, provided helium pressure value is maintained at 2 to 2.5 MPa. Further, it should be taking into account that a radial gap between the fuel rod 27 and the cladding 30 in the described fuel elements must be no less than 0.05*10⁻³ m. This prerequisite is caused by process problems inherent in assembling fuel elements (see Fig.7).

As mentioned above, due to the low heat conductivity of the nuclear fuel core 27 material, and in view of the aforementioned prerequisites the cladding 30 of the improved fuel rod for a reactor with 2600 to 3900 MW thermal rating should have an outer and inner diameter from 5.85*10⁻³ m to 6.99*10⁻³ m and from 5.01*10⁻³ m to 5.95*10⁻³ m, respectively. Like the updated VVER-440 reactor fuel elements, the first two prerequisites dictate that a relative rod-to-rod spacing between the fuel elements must provide a water-to-uranium ratio in the improved core close to the water-to-uranium ratio of the grids in operating VVER-1000 reactors. Taking into account all of the prerequisites above and the results of neutron-physical, thermal-hydraulic and mechanical calculations and, primarily, results of analysis of the VVER-1000 accidents with leak of coolant from the primary coolant circuit, the inventors have determined the ranges of critical parameters for the improved fuel element in for the updated reactor with 2600 to 3900 MW thermal rating, in particular:
an outer diameter of the cladding of the disclosed fuel element should be in the range from 5.85*10⁻³ m to 6.99*10⁻³ m;
an inner diameter of the cladding of the disclosed fuel element should be in the range from 5.01*10⁻³ m to 5.95*10⁻³ m;
a diameter of the nuclear fuel core in the described fuel element should be in the range from 4.88*10⁻³ m to 5.74*10⁻³ m.
a weight of the nuclear fuel core in the described fuel element should be in the range from 0.62 to 0.96 kg.

Actually, making the disclosed VVER-1000 fuel element with an outer diameter less than 5.85*10⁻³ m (e.g. 5.8*10⁻³ m) and a nuclear fuel core with a diameter and weight no more than 4.88*10⁻³ m and 0.62 kg, respectively, results in failure to observe the prerequisite relating to the possibility for modifying a relative specific fuel charge in the updated VVER-1000 fuel assembly as compared to a typical VVER-1000 fuel assembly (30% excess), while making the fuel elements with an outer diameter greater than 6.99*10⁻³ m (e.g. 7.0*10⁻³ m) and a nuclear fuel core with a diameter and weight no less than 5.74*10⁻³ m and 0.96 kg, respectively, results in failure to observe the prerequisite relating to the possible increase in hydraulic friction loss in the invented VVER-1000 fuel assembly as compared to a typical VVER-1000 fuel assembly of (more than 25% excess).

It should be noted that the first two prerequisites enable the determination of the most preferable ranges of critical parameters for the disclosed fuel element in the updated core of a reactor with 2600 to 3900 MW thermal rating, in particular:
an outer diameter of the cladding of the disclosed fuel element should be in the range from 5.85*10⁻³ m to 6.17*10⁻³ m or from 6.66*10⁻³m to 6.99*10⁻³ m;
an inner diameter of the cladding of the disclosed fuel element should be in the range from 5.0*10⁻³ m to 5.22*10⁻³ m or from 5.67*10⁻³m 5.93*10⁻³ m;
a diameter of the nuclear fuel core in the disclosed fuel element should be in the range from 4.88*10⁻³ m to 5.07*10⁻³ m or from 5.53*10⁻³m 5.74*10⁻³ m;
a weight of the nuclear fuel core in the disclosed fuel element should be in the range from 0.67 to 0.75 kg or from 0.86 to 0.96 kg.

Further, from the first and fifth prerequisites it follows that the most preferable fuel elements for the updated core in a VVER-1000 reactor (with 3000 MW thermal rating) are the fuel elements having the following parameters:
an outer diameter of the cladding of the disclosed fuel element should be in the range from 5.97*10⁻³ m to 6.07*10⁻³ m or from 6.76*10⁻³m to 6.88*10⁻³ m;
an inner diameter of the cladding of the disclosed fuel element should be in the range from 5.08*10⁻³ m to 5.14*10⁻³ m or from 5.76*10⁻³m 5.83*10⁻³ m;
a diameter of the nuclear fuel core in the disclosed fuel element should be in the range from 4.96*10⁻³ m to 4.98*10⁻³ m or from 5.62*10⁻³m to 5.66*10⁻³ m;
a weight of the nuclear fuel core in the disclosed fuel element should be in the range from 0.69 to 0.72 kg or from 0.89 to 0.93 kg.

In operation of the disclosed fuel element, a working fluid (primary circuit coolant) flows over the external surface of the cladding 24 of the improved VVER-1000 fuel element 12, thereby extracting heat from the nuclear fuel core 27 (see Fig.7).

The improved fuel assembly of the updated reactor with 2600 to 3900 MW thermal rating (taking into account the above prerequisites and considerations) must have fuel elements with an outer and inner diameters from 5.85*10⁻³ m to 6.17*10⁻³ m and from 5.01*10⁻³ m to 5.23*10⁻³ m, respectively, or from 6.66*10⁻³ m to 6.99*10⁻³ m and from 5.67*10⁻³ m to 5.93*10⁻³ m, respectively.

Listed below are the preferable ranges of critical parameters of the improved fuel assembly for the updated VVER-1000 reactor (with 3000 MW thermal rating). In a bundle including 648 fuel elements:
an outer diameter of the fuel element cladding should be in the range from 5.97*10⁻³ m to 6.07*10⁻³ m;
an inner diameter of the fuel element cladding should be in the range from 5.08*10⁻³ m to 5.14*10⁻³ m;
a weight of uranium dioxide should be in the range from 450.6 to 467.5 kg,
while in a bundle comprising 528 fuel elements:
an outer diameter of the fuel element cladding should be in the range from 6.76*10⁻³ m to 6.88*10⁻³ m;
an inner diameter of the fuel element cladding should be in the range from 5.76*10⁻³ m to 5.83*10⁻³ m;
a weight of uranium dioxide should be in the range from 471.2 to 491.7 kg,
and in a bundle comprising fuel elements of two dimensions, made up of 528 fuel elements (114 plus 414 fuel elements):
an outer diameter of the fuel element cladding should be in the range from 5.97*10⁻³ m to 6.07*10⁻³ m (for 114 fuel elements) and from 6.765*10⁻³ m to 6.88*10⁻³ m (for 414 fuel elements);
an inner diameter of the fuel element cladding should be in the range from 5.08*10⁻³ m to 5.14*10⁻³ m (for 114 fuel elements) and from 5.76*10⁻³ m to 5.83*10⁻³ m (for 414 fuel elements) ;
a weight of uranium dioxide should be in the range from 448.7 to 467.8 kg.

Making the fuel element in the VVER-1000 fuel assembly with an outer diameter less than 5.85*10⁻³ m (e.g. 5.8*10⁻³ m) and, respectively, with an inner cladding diameter no more than 5.01*10⁻³ m and a fuel weight in the fuel assembly no more than 377.4 kg results in failure to observe the prerequisite relating to the possibility for modifying a relative specific fuel charge in the updated VVER-1000 fuel assembly as compared to a typical VVER-1000 fuel assembly (30% excess), while making a fuel element with an outer diameter greater than 6.99*10⁻³ m (e.g. 7.0*10⁻³ m) and, respectively, with an inner cladding diameter no less than 5.93*10⁻³ m and a fuel weight in the fuel assembly no less than 505.8 kg results in failure to observe the prerequisite relating to the possible increase in hydraulic friction loss in the improved VVER-1000 fuel assembly as compared to a typical VVER-1000 fuel assembly (more than 25% excess). On the other hand, making the fuel element in the disclosed fuel assembly with a diameter greater than 6.17*10⁻³ m and, respectively, with an inner cladding diameter no less than 5.22*10⁻³ m and a fuel weight in the fuel assembly no less than 484.2 kg, and less than 6.66*10⁻³ m and, respectively, with an inner cladding diameter no more than 5.76*10⁻³ m and a fuel weight in the fuel assembly no less than 456.3 kg, results in failure to observe the first two prerequisites. The point is that the above prerequisites dictate that the relative rod-to-rod spacing between fuel elements in the assembly disclosed must provide a water-to-uranium ratio for a VVER-1000 reactor no more than 2.63, i.e. close to that of the grids in the operating VVER-1000 reactors, while this is not so.

Fig.4 shows an exemplary structure of the improved VVER-1000 fuel assembly (a sector constituting 1/12 portion of the fuel assembly cross-section) with the fuel elements 12 of two dimensions (6.8*10⁻³ m and 6.0*10⁻³ m). 414 fuel elements 12 of 6.8*10⁻³ m in diameter are arranged in regular clusters of a hexagonal package with a spacing of 9.91*10⁻³ m. The fuel elements 12 are inserted into regular and peripheral cells in a spacer grid 17. 114 fuel elements of 6.0*10⁻³ m in diameter are arranged around guide thimbles 20 (control and protective system sleeves of 12.6*10⁻³ m in diameter). Centers of the fuel element arrangement are offset by 1.0*10⁻³ m from the regular clusters along radial rays away from the centers of guiding thimbles 20. These fuel elements 12 are inserted into dedicated cells in the spacer grid 17, the cells having an unsymmetrical shape.

Fig.5 shows an exemplary structure of the improved VVER-1000 fuel assembly (a sector constituting 1/12 portion of the fuel assembly cross-section) with fuel elements 12 of identical diameter. 414 regular fuel elements 12 of 6.8*10⁻³ m in diameter are arranged in regular clusters of a hexagonal package with 9.91*10⁻³ m spacing. The fuel elements 12 are inserted into regular and peripheral cells in a spacer grid 17. 114 offset fuel elements of the same diameter are arranged around guide thimbles 20 (control and protective system sleeves of 12.8*10⁻³ m in diameter). Centers of the fuel element arrangement are offset by 0.67*10⁻³ m from regular clusters along radial rays away from the centers of guide thimbles 20. The fuel elements 12 are inserted into dedicated cells of the spacer grid 17, the cells having a deformed cellular shape.

In the disclosed core of the updated reactor with 1150 to 1700 MW thermal rating (taking into account the above prerequisites), the cladding 24 of the invented fuel rod should have an outer and inner diameter from 5.85*10⁻³ m to 6.17*10⁻³ m and from 5.01*10⁻³ m to 5.23*10⁻³ m, respectively, or from 6.66*10⁻³ m to 6.99*10⁻³ m and from 5.68*10⁻³ m to 5.95*10⁻³ m, respectively. The point is that only the fuel elements with the aforementioned cladding diameters provide the observance of the third and fourth prerequisites. Taking into account all of the aforementioned prerequisites, and the results of neutron-physical, thermal-hydraulic and mechanical calculations and, primarily, the results of analysis of the VVER-440 accidents with leak of coolant from the primary coolant circuit, the inventors have determined the most preferable ranges of critical parameters for the improved core of the updated VVER- 440 reactor (with 1375 MW thermal rating). In particular, in a fuel assembly comprising 270 fuel elements:
an outer diameter of the cladding should be in the range from 5.97*10⁻³ m to 6.07*10^{-³} m;
an inner diameter of the cladding should be in the range from 5.09*10⁻³ m to 5.14*10⁻³ m; and
a water-to-uranium ratio should be from 1.8 to 1.9,
while for a bundle comprising 216 fuel elements:
an outer diameter of the cladding should be in the range from 6.76*10⁻³ m to 6.88*10⁻³ m;
an inner diameter of the cladding should be in the range from 5.77*10⁻³ m to 5.83*10⁻³ m; and
a water-to-uranium ratio should be from 1.7 to 1.8.

It should be noted that based on the calculations, for the disclosed core in the reactor with 1375 MW heat rating, having fuel assemblies composed from fuel elements having the cladding with an outer diameter of 6.8*10⁻³ m, an average fuel-element linear load will be 7.5 kW/m, an average surface load will be 351 KW/m², with a departure from nucleate boiling ratio (DNBR) in the maximum power fuel assembly being 4.5.

Therefore, making a fuel element in the disclosed VVER-440 core with an outer diameter less than 5.85*10⁻³ m, e.g. 5.8*10⁻³ m (the other aforementioned essential features being observed and/or not), results in failure to observe the prerequisite relating to the possibility of modifying a relative specific fuel charge in the updated VVER-440 fuel assembly as compared to a typical VVER-440 fuel assembly (15% excess), while making a fuel element with a diameter greater than 6.99*10⁻³ m, e.g. 7.0*10⁻³ m (the other aforementioned essential features being observed and/or not), results in failure to observe the prerequisite relating to the possible increase in hydraulic friction loss in the updated VVER-440 core as compared to a typical VVER-440 core (more than 35% excess). On the other hand, making a fuel element in the disclosed improved core with a diameter greater than 6.17*10⁻³ m and less than 6.66*10⁻³ m (the other aforementioned essential features being observed and/or not) results in failure to observe the first two aforementioned prerequisites.

In operation of the disclosed VVER-440 core, a coolant, water, flows from the bottom upwards, so that the fuel assembly is cooled by natural circulation (see Figs. 1 and 2). The jacket 3 accommodating the fuel elements 2 unites all of the fuel assembly components to an integral unit, providing the required direction of the coolant flow inside the fuel assembly between separate fuel elements 2 in the fuel assembly, and between the fuel assemblies in the reactor core. The assembly jacket 3 is free from the inner pressure of the coolant, which occurs when the coolant flows through the core. To provide uniform coolant temperature at the fuel assembly outlet, the coolant flow rate in the fuel assemblies is profiled in accordance with heat release distribution across the reactor radius, using throttle collars (not shown) mounted at the coolant inlet to the fuel assembly. Water heated in the core is directed to steam generators where it gives its heat to water of a secondary coolant circuit and returns to the core.

In the disclosed core of the upgraded reactor with 2600 to 3900 MW thermal rating (taking into account the above prerequisites), the cladding 30 of the invented fuel rod should have an outer and inner diameter from 5.85*10⁻³ m to 6.17*10⁻³ m and from 5.0*10⁻³ m to 5.22*10⁻³m, respectively, and/or from 6.66*10⁻³ m to 6.99*10⁻³ m and from 5.67*10⁻³ m to 5.93*10⁻³ m, respectively. The point is that only the fuel elements with the aforementioned cladding diameters provide the observance of the third and fourth prerequisites. Taking into account all of the aforementioned prerequisites and the results of neutron-physical, thermal-hydraulic and mechanical calculations and, primarily, the results of analysis of the VVER-1000 accidents with leak of coolant from the primary coolant circuit, the authors have determined the most preferable ranges of critical parameters for an improved core of the updated VVER-1000 reactor (with 3000 MW thermal rating). In particular, in the fuel assembly comprising 648 fuel rods:
an outer diameter of the cladding should be in the range from 5.97*10⁻³ m to 6.07*10⁻³ m;
an inner diameter of the cladding should be in the range from 5.089*10⁻³ m to 5.14*10⁻³ m; and
a water-to-uranium ratio should be from 2.5 to 2.6,
while in the fuel assembly comprising 528 fuel elements:
an outer diameter of the cladding should be in the range from 6.76*10⁻³ m to 6.88*10⁻³ m;
an inner diameter of the cladding should be in the range from 5.76*10⁻³ m to 5.83*10⁻³ m; and
a water-to-uranium ratio should be from 2.1 to 2.2,
and in the fuel assembly with fuel elements of two dimensions, comprising 528 (114 plus 414) fuel elements:
an outer diameter of the cladding should be in the range from 5.97*10⁻³ m to 6.07*10⁻³ m (for 114 fuel elements) and from 6.76*10⁻³ m to 6.88*10⁻³ m (for 414 fuel elements);
an inner diameter of the cladding should be in the range from 5.08*10⁻³ m to 5.14*10⁻³ m (for 114 fuel elements) and from 5.76*10⁻³ m to 5.83*10⁻³ m (for 414 fuel elements); and
a water-to-uranium ratio should be from 2.1 to 2.6.

Therefore, making a fuel element in the disclosed VVER-1000 reactor core with an outer diameter less than 5.85*10⁻³ m, e.g. 5.8*10⁻³ m, (the other aforementioned essential features being observed and/or not), results in failure to observe the prerequisite relating to the possibility of modifying the relative specific fuel charge in the updated VVER-1000 reactor fuel assembly as compared to a typical VVER-1000 reactor fuel assembly (30% excess), while making a fuel element with an outer diameter greater than 6.99*10⁻³ m, e.g. 7.0*10⁻³ m (the other aforementioned essential features being observed and/or not), results in failure to observe the prerequisite relating to the possible increase in hydraulic friction loss in the updated VVER-1000 core as compared to the typical VVER-440 core (more than 35% excess). On the other hand, making a fuel element in the improved core with a diameter greater than 6.17*10⁻³ m and less than 6.66*10⁻³ m (the other aforementioned essential features being observed and/or not) results in failure to observe the first two aforementioned prerequisites.

In operation of the disclosed VVER-1000 core, a coolant, water, flows from the bottom upwards, so that the fuel assembly is cooled by natural circulation (see Figures 3 and 5). The jacket 13 accommodating the fuel elements 12 unites all of the fuel assembly components in an integral unit, providing the required direction of the coolant flow inside the fuel assembly between separate fuel elements 2 in the assembly, and between the fuel assemblies in the reactor core. The assembly jacket 3 is free from the coolant inner pressure occurring when the coolant flows through the core. Water heated in the core is directed to steam generators where it gives its heat to water of a secondary coolant circuit and returns to the core.

Analysis of functionality and thermal mechanical state of the disclosed fuel elements have offered the possibility to determine several main structural parameters of fuel elements for an improved fuel assembly and the updated VVER core. The estimations have shown that a significant reduction in a heat load on a fuel element makes it possible to reject fuel pellets with a center hole which are traditional in VVER reactors and not taken up in foreign PWRs. This decision is explained, from one hand, by a relatively small reduction in the fuel temperature due to the central hole when the fuel element heat loads are decreased, and by the enhanced safety margin in respect of fuel melting, and, from the other hand, by the process problems which may arise in fabrication of pellets with a center hole less than 1.5*10⁻³ m.

Fig.8 shows exemplary curves defining variation, at a maximum design accident (MDA), in the cladding temperature of fuel elements with maximum linear heat load for the conventional (with 9.1*10⁻³ m outer diameter of a conventional fuel element cladding) and the updated (with 6.8*10⁻³ m outer diameter of the disclosed fuel element cladding) VVER-440 core. After analysis of the fuel element state in the indicated conditions, it can be seen that the fuel element in the improved core fuel assembly has a significantly lower maximum temperature of the cladding. For example, the reduction in the maximum temperature is 278° C for a "hot" fuel element (a fuel element with a maximum linear heat load) and 150°C for fuel elements with a medium linear heat load.

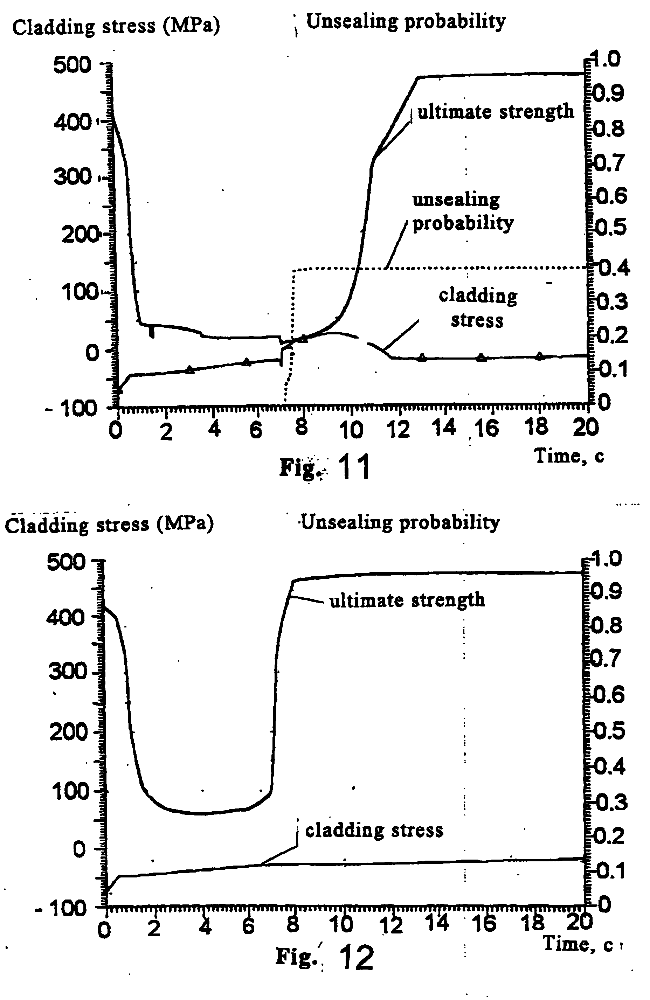

Figures 9 and 10 show exemplary curves defining variation, at a maximum design accident (MDA), in cladding temperatures of fuel elements with maximum and medium heat load for the conventional (with 9.1*10⁻³ m outer cladding diameter of the conventional fuel element) and the improved (with 6.8*10⁻³ m outer cladding diameter of the disclosed fuel element) VVER-1000 core. According to analysis of the fuel element state, the reduction in the maximum temperature is 278°C for a "hot" fuel element and 142°C for fuel elements with a medium load.

Such values of the cladding temperature reduction drastically modify the operating capacity level of fuel elements and the forecasted level of safety for VVER-440 and VVER-1000 reactors. This is primarily caused by a strong dependence of mechanical properties of the cladding material on the temperature in T>550°C region, and also by the intensively increasing contribution of zirconium-steam reaction at T>700°C temperatures. Therefore, changing to the improved core and, respectively, the reduction in the maximum MDA temperature from 900°C to a level below 600°C, appreciably eliminate the effect of zirconium-steam reaction on altering the properties of the material and geometrical dimensions of the claddings.

It should be also noted that due to the reduction in specific heat loads, fuel elements in the upgraded VVER reactor core have significantly lower fuel temperatures and exhibit enhanced working capacity owing to the decreased effect of the gaseous fission product pressure on the cladding. The reduction in the release of gaseous fission products in the improved core fuel elements also minimizes the corrosive effect of fuel on the cladding. On the basis on estimations it can be expected that the average fuel burn-up of 55 to 60 MW a day per kg is feasible in the fuel elements of the updated VVER core.

In reactor transients associated with power maneuvering, the fuel element working capacity depends on a lot of factors: a heat load level, operation history, power variation speed and magnitude, corrosive effect of nuclear fuel core on the cladding, etc. To avoid unsealing the fuel elements in maneuvering conditions, restrictions are imposed on the conventional reactor power increase speed and range, this resulting in economical losses. Values of the permissible power increase step are most dramatically reduced with the increase both in the fuel burn-up and the initial linear load. Therefore, the reduction in linear heat loads on fuel elements is one of the most effective ways of alleviating this problem. The reduction in maximum linear heat loads from 40 kW/m to 20 kW/m offers generally unlimited prospects of NPP's power maneuvering for existing VVER fuel element designs.

The average linear load per a fuel element in the improved fuel assembly for the updated VVER-440 core, having an outer diameter from 6.7*10⁻³ m to 6.9*10⁻³ m, is 7.5 kW/m, and 6.01 kW/m for fuel elements with a cladding diameter from 5.9*10⁻³ m to 6.1*10⁻³ m (the average linear load on a conventional 9.1*10⁻³ m diameter fuel element is 12.82 kW/m). 1

The average linear load per a fuel element in the updated VVER-100 core, having an outer diameter from 6.66*10⁻³ m to 6.99*10⁻³ m, is 9.48 kW/m and 8.22 kW/m for fuel elements with a cladding diameter from 5.85*10⁻³ m to 6.17*10⁻³ m (the average linear load on a conventional 9.1*10⁻³ m diameter fuel element is 15.67 kW/m). Therefore, switching to reduced heat loads on the fuel elements in the updated VVER core radically extends the reactor power maneuvering range.

Figures 11 and 12 show variations in working capacity parameters of a conventional (9.1*10⁻³ m diameter) and improved (6.8*10⁻³ m diameter) fuel element in a VVER-440 reactor in the course of the accident with Dᵢₙ500mm-line break at the reactor's inlet. The estimated probability of the conventional fuel element cladding rupture is 0.4. Fig. 11 shows dynamics of the rupture probability variation. It should be noted that characteristics of mechanical loading on a cladding depend on the coolant pressure gradient and the inner pressure gradient in the fuel element, and on the thermal conditions of the cladding. As the aforementioned accident evolves, the coolant pressure appears to exceed the pressure in the fuel element at a high cladding temperature level (above 800°C), this resulting in negative plastic deformations in the cladding and, as a consequence, in subsequent fuel-cladding contact. Owing to the mechanical interaction between the fuel and the cladding (during first 4 seconds), hoop stresses take positive values, this resulting in the increased likelihood of the conventional fuel element cladding rupture. Estimations show that the claddings of fuel elements in the improved VVER-440 core (Fig.12) don't lose stability in the course of the accident, since the claddings have lower temperatures (by ∼280°C). As seen in Fig.12, fuel elements in the disclosed core have a significant ultimate strength margin to avoid the cladding rupture (zero likelihood that the fuel elements will lose tightness).

Neutron-physical investigations of the updated VVER-440 core have provided evidences that:
the disclosed core offers the main design and, for some parameters, improved neutron-physical characteristics with a significant increase in the VVER-440 safety and operational reliability of fuel elements;
a maximum value of a linear heat load on a fuel element in the disclosed core does not exceed q1<12.5 kW/m (without account of uncertainty factors) in a stationary fuel column, while for conventional fuel elements this value is q1<28.5 kW/m;
the fuel charge (by U) is the same as in a commercial VVER-440 reactor;
the energy-liberation field irregularity has a maximum fuel assembly power irregularity factor of Kq^{max}=1.24 in a stationary fuel column, while a maximum fuel element power irregularity factor does not exceed KqKk^{max}=1.37, which are lower than the design values;
the upgraded core allows a wider range of organizing the fuel assembly in-in-out scheme at minor neutron leakage, owing to the great energy-liberation field irregularity factor margin. This improves the fuel use (by ∼15%) and reduces the neutron fluence on the reactor vessel;
estimates of the fuel use in the improved core during the four-year fuel cycle have shown that the operation time of a stationary fuel column is no less than 300 eff. days, while the average fuel burn-up is 50.6 MW a day per kg at the average 3.74% enrichment of the replenishment fuel.

Thermal-physical investigations of the updated VVER-440 core have shown that:
the increase in hydraulic friction losses in the invented core, as compared to a conventional VVER-440 reactor core design, does not exceed the existing head margin of main circulation pumps. By way of example, when the conventional fuel assemblies are replaced by the fuel assemblies with fuel elements of 6.0*10⁻³ m and 6.8*10⁻³ m in diameter, the specific flow resistance of the entire core increases by about 0.02-0.025 MPa, respectively;
departure from nucleate boiling in the invented core (with 10% volume vapor content) is 1.22-1.25, while a critical power ratio in the nominal conditions does not fall below about 9 (without account of uncertainty factors).

Comparative analysis of operating capacity of the fuel elements in conventional and disclosed VVER-440 cores at the accidents with break of main Dᵢₙ500mm-line in the primary coolant circuit has shown that
a temperature of claddings of maximum heat-stressed fuel elements in the disclosed core in first about ten seconds of the Dᵢₙ500mm-line break accident is by 300° lower that that of the conventional fuel elements and does not exceed 600°C, this generally eliminating evolution of zirconium-steam reaction;
a conventional core is generally lacking operating capacity margin of fuel elements in terms of the cladding material ultimate strength at the accident temperatures (i.e. the claddings lose tightness), while the fuel elements in the disclosed core exhibit the margin in excess of K>5 even at a maximum initial load;
temperature of claddings of medium-loaded fuel elements in the disclosed core does not generally increase during first 10 seconds of the process.

In the light of the foregoing it can be concluded that switching to the updated core in VVER reactors with 1150 to 1700 MW thermal rating offers the possibility for reduction in linear heat loads on a fuel element by a factor of 1.71-2.13. Such significant reduction in linear heat loads on the improved fuel elements in the fuel assembly of the upgraded VVER-440 core offers the following benefits:
safety of the power plant is increased;
the problem of reactor power maneuvering is alleviated;
the working capacity of fuel elements in normal operation conditions is enhanced, this permitting the conclusion that a fuel burn-up from 55 to 60 MW a day per kg is feasible in the fuel elements.

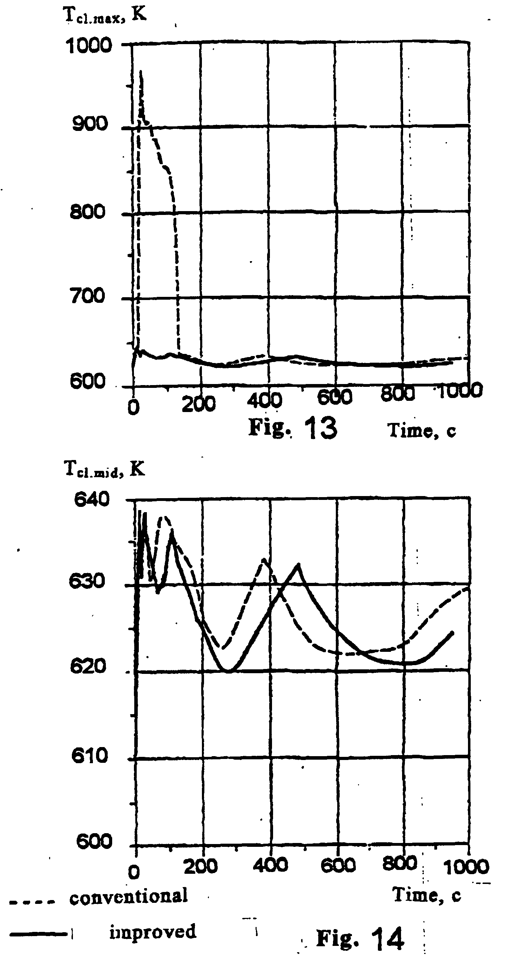

Further, changing to the updated fuel assemblies offers additional possibilities for solving the issues associated with extension of service life of NPP's with VVER reactors. Comparative analysis of working capacity of the fuel elements in a conventional and improved VVER-1000 cores at the blackout accidents and the accidents with break of main circulation Dᵢₙ850mm-line has shown that
in the course of the accidents with break of main circulation Dᵢₙ850mm-line, cladding temperatures in the disclosed core are 150-400°C lower compared to those in the conventional VVER-1000 core. This essentially precludes the likelihood of essential evolution of zirconium-steam reaction. Fuel element working capacity margin (in terms of the cladding material ultimate strength) in the disclosed core is 5-6 times as that of a conventional VVER-1000 core;
at the blackout accident, a temperature of conventional fuel element claddings may reach a value about 1000°C, which is hazardous in view of possible rupture of conventional fuel elements, while in the disclosed core fuel elements the respective temperature conditions do not essentially exceed a VVER-100 stationary operation level (see Figs.13 and 14).

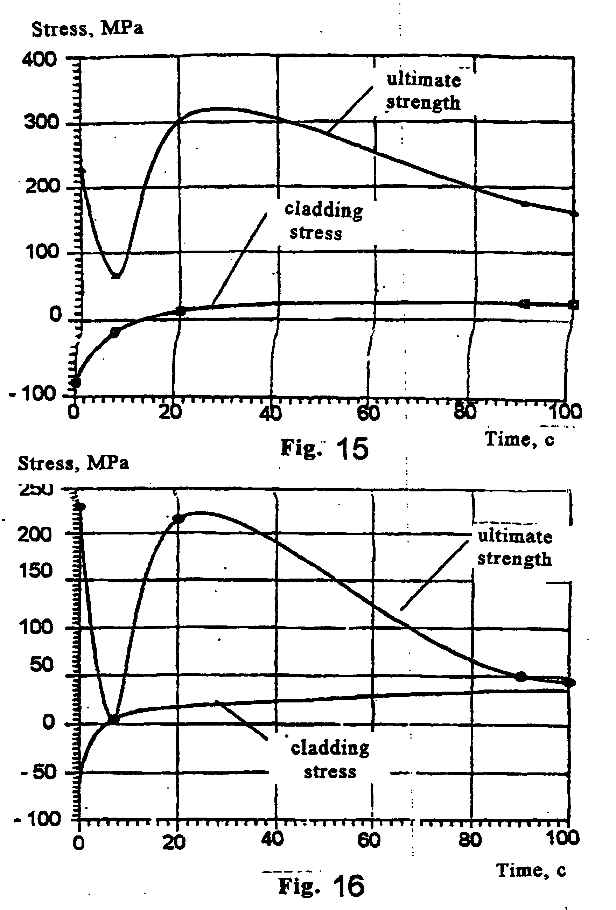

Figures 15 and 16 show stresses occurring in a cladding and ultimate short-time strength of the cladding material at different points of the maximum design accident evolution for a conventional and improved VVER-1000 cores, respectively. As seen in Fig.15, stresses in claddings of maximum-stressed fuel elements in a conventional VVER-100 core at some instances of the accident evolution (7 seconds and 90-100 seconds) can reach the ultimate strength. Therefore, the maximum-stressed fuel elements in a conventional core are prone to rupture at the MDA. On the other hand, according to Fig.16, fuel elements in the improved core at any point of the accident have cladding stresses which do not exceed the cladding material ultimate strength. Moreover, the strength margin-to-ultimate strength ratio in the improved core fuel elements is no less than 6, while in the conventional core it is 1, i.e. lacking.

On the basis of the foregoing it can be stated that switching to the updated core in VVER-1000 reactors ensures 1.6-2.0 times reduction in heat loads on fuel elements, and also provides the following merits:
an acceptable and even improved neutron-physical characteristics can be provided with essential increase in the nuclear fuel reliability and reactor safety;
heat-liberation field irregularity is reduced: a maximum fuel assembly power irregularity factor in a stationary fuel column does not exceed Kq^{max}=1.27, while a maximum fuel element power irregularity factor does not exceed KqKk^{max}=1.48;
a maximum value of a fuel element linear heat load does not exceed the value q1^{max}=17.5 *10⁻³ W/m (without account of uncertainty factor) in a stationary fuel column;
the fuel charge (by U) does not increase as compared to a conventional VVER-1000 reactor, while U-235 can be loaded about by 5-6% less;
there is provided the optimized set of fuel temperature reactivity coefficients, dρ/dtᵤ, and a non-negative coolant density reactivity coefficient, dρ/d_{H} 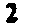 _{O}, in the temperature range extended as compared to that of a conventional VVER-1000 reactor (the average core temperatures being above 130-150°C at zero power);
total efficiency of control facilities is 6.7% of Δc/c at the beginning of stationary loading and 6.6% of Δc/c at the end thereof, this offering, with a safety margin, 1.0% of c/c of subcriticality required by the Nuclear Safety Regulations, when the accident protection system responds to compensate for fast-appearing reactivity effects;
safety of the power plant is improved;
the problem of reactor power maneuvering can be alleviated;
the working capacity of fuel elements in normal operation conditions is increased, this giving grounds for the conclusion that the average fuel burn-up of 55-60 MW a day per kg is feasible in the fuel elements. Estimations have shown that the specific flow resistance of the entire core increases by 3-5% when the conventional fuel elements are replaced by the fuel assemblies with the disclosed fuel elements, while the total flow resistance of the entire primary coolant circuit increases no more than by 1%. The coolant flow rate through the updated core will decrease no more than by 0.5%, the pump power remaining essentially unchanged. It should be noted that the disclosed fuel element, improved fuel assembly and upgraded core are useful not only in VVER-440 and VVER-1000 reactors, but also in other water-cooled reactors.

### Industrial Applicability

The present invention is useful in various types of water-cooled vessel reactors using fuel elements arranged in parallel, especially in water-cooled and water-moderated power reactors of VVER-440 and VVER-1000 type.

## Claims

1. A water-moderated power reactor core comprising fuel assemblies formed from fuel rods, wherein at least one of the fuel assemblies comprises from 250 to 270 fuel rods, each having a cladding with an outer diameter in the range from 5.85*10⁻³ m to 6.17*10⁻³ m and an inner diameter in the range from 5.01*10⁻³ m to 5.23*10⁻³ m, or from 196 to 216 fuel rods, each having a cladding with an outer diameter in the range from 6.66*10⁻³ m to 6.99*10⁻³ m and an inner diameter in the range from 5.68*10⁻³ m to 5.95*10⁻³ m, provided a water-to-uranium ratio is in the range from 1.6 to 2.0, for a reactor with 1150 to 1700 MW thermal rating, or the fuel assembly comprises from 498 to 648 fuel rods, each having a cladding with an outer diameter in the range from 5.85*10⁻³ m to 6.17*10⁻³ m and/or from 6.66*10⁻³m to 6.99*10⁻³ m, and an inner diameter in the range from 5.0*10⁻³ m to 5.22*10⁻³ m and/or from 5.67*10⁻³ m to 5.93*10⁻³ m, respectively, provided a water-to-uranium ratio is in the range from 2.01 to 2.74, for a reactor with 2600 to 3900 MW thermal rating.

2. The reactor core as set forth in claim 1, wherein said fuel assembly comprises 270 fuel rods, each having a cladding with an outer diameter in the range from 5.97*10⁻³ m to 6.07*10⁻³ m and an inner diameter in the range from 5.09*10⁻³ m to 5.14*10⁻³ m, provided a water-to-uranium ratio is in the range from 1,8 to 1.9, or the fuel assembly comprises 216 fuel rods, each having a cladding with an outer diameter in the range from 6.76*10⁻³ m to 6.88*10⁻³ m and an inner diameter in the range from 5.77*10⁻³ m to 5.83*10⁻³ m, provided a water-to-uranium ratio is in the range from 1.7 to 1.8, for a reactor with 1375 MW thermal rating.

3. The reactor core as set forth in claim 1, wherein said fuel assembly comprises 648 fuel rods, each having a cladding with an outer diameter in the range from 5.97*10⁻³ m to 6.07*10⁻³ m and an inner diameter in the range from 5.08*10⁻³ m to 5.14*10⁻³ m, provided a water-to-uranium ratio is in the range from 2,5 to 2.6, or said fuel assembly comprises 528 fuel rods, each having a cladding with an outer diameter in the range from 6.76*10⁻³ m to 6.88*10⁻³ m and an inner diameter in the range from 5.76*10⁻³ m to 5.83*10⁻³ m, provided a water-to-uranium ratio is in the range from 2.1 to 2.2, for a reactor with 3000 MW thermal rating.

4. The reactor core as set forth in claim 1 or 3, wherein said fuel assembly comprises 114 fuel rods, each having a cladding with an outer and inner diameter in the range from 5.97*10⁻³ m to 6.07*10⁻³ m and from 5.8*10⁻³ m to 5.14*10⁻³ m, respectively, and 414 fuel rods, each having a cladding with an outer and inner diameter in the range from 6.76*10⁻³ m to 6.88*10⁻³ m and from 5.76*10⁻³ m to 5.83*10⁻³ m, respectively, provided a water-to-uranium ratio is in the range from 2.1 to 2.6, for a reactor with 3000 MW thermal rating.

5. A water-moderated power reactor fuel assembly comprising a rack and a bundle of fuel rods with nuclear fuel, such as uranium dioxide, enclosed in a cladding, wherein the bundle comprises from 250 to 270 fuel rods, each having a cladding with an outer diameter in the range from 5.85*10⁻³ m to 6.17*10⁻³ m and an inner diameter in the range from 5.01*10⁻³m to 5.23*10⁻³ m, or from 196 to 216 fuel rods, each having a cladding with an outer diameter in the range from 6.66*10⁻³ m to 6.99*10⁻³ m and an inner diameter in the range from 5.68*10⁻³ m to 5.95*10⁻³ m, a weight of uranium dioxide in the bundle being in the range from 103.6 kg to 142.1 kg, for a reactor with 1150 to 1700 MW thermal rating, or the bundle comprises from 498 to 648 fuel rods, each having a cladding with an outer diameter in the range from 5.85*10⁻³ m to 6.17*10⁻³ m and an inner diameter in the range from 5.0*10⁻³ m to 5.22*10⁻³ m, respectively, and/or with an outer diameter in the range from 6.66*10⁻³ m to 6.99*10⁻³ m and an inner diameter in the range from 5.67*10⁻³ to 5.93*10⁻³ m, respectively, a weight of uranium dioxide in the bundle being in the range from 377.4 kg to 505.8 kg, for a reactor with 2600 to 3900 MW thermal rating.

6. The fuel assembly as set forth in claim 5, wherein in a reactor with 1375 MW thermal rating, a weight of uranium dioxide in the assembly is in the range from 129.6 kg to 134.5 kg, the outer and inner diameter of the cladding being in the range from 5.97*10⁻³ m to 6.07*10⁻³ m and from 5.09*10⁻³ m to 5.14*10⁻³ m, respectively, for the bundle of 270 fuel elements, or a weight of uranium dioxide in the assembly is in the range from 133.1 kg to 138.0 kg, the outer and inner diameter of the cladding being in the range from 6.76*10⁻³ m to 6.88*10⁻³ m and from 5.77*10⁻³ m to 5.83*10⁻³ m, respectively, for the bundle of 216 fuel elements.

7. The fuel assembly as set forth in claim 5, wherein in a reactor with 3000 MW thermal rating, the bundle comprises 648 fuel elements, each having a cladding with an outer and inner diameter in the range from 5.97*10⁻³ m to 6.07*10⁻³ m and from 5.08*10⁻³ m to 5.14*10⁻³ m, respectively, a weight of uranium dioxide in the bundle being in the range from 450.5 kg to 467.2 kg, or 528 fuel elements, each having a cladding with an outer and inner diameter in the range from 6.76*10⁻³ m to 6.88*10⁻³ m and from 5.76*10⁻³ m to 5.83*10⁻³ m, respectively, a weight of uranium dioxide in the bundle being in the range from 471.2 kg to 491.7 kg.

8. The fuel assembly as set forth in claim 5 or 7, wherein in a reactor with 3000 MW thermal rating, the bundle comprises 114 fuel elements, each having a cladding with an outer and inner diameter in the range from 5.97*10⁻³ m to 6.07*10⁻³ m and from 5.08*10⁻³ m to 5.14*10⁻³ m, respectively, and 414 fuel elements, each having a cladding with an outer and inner diameter in the range from 6.76*10⁻³ m to 6.88*10⁻³ m and from 5.76*10⁻³ m to 5.83*10⁻³ m, respectively, a weight of uranium dioxide in the bundle being in the range from 448.7 kg to 467.8 kg.

9. The fuel assembly as set forth in any one of claims 5 to 8, wherein the nuclear fuel is in the form of pellets with an average density of uranium dioxide in the range from 10.4*10³ kg/m³ to 10.7*10³ kg/m³.

10. A water-moderated power reactor fuel element comprising a nuclear fuel core located within in a cylindrical cladding, wherein an outer diameter of the cladding is in the range from 5.85*10⁻³ m to 6.99*10⁻³ m, the nuclear fuel core has a diameter in the range from 4.90*10⁻³ m to 5.75*10⁻³ m and a weight in the range from 0.42 kg to 0.66 kg for a reactor with 1150 to 1700 MW thermal rating, or an outer diameter of the cladding is in the range from 5.85*10⁻³ m to 6.99*10⁻³ m, the nuclear fuel core has a diameter in the range from 4.88*10⁻³ m to 5.74*10⁻³ m and a weight in the range from 0.62 kg to 0.96 kg for a reactor with 2600 to 3900 MW thermal rating.

11. The fuel element as set forth in claim 10, wherein an outer diameter of the cladding is in the range from 5.85*10⁻³ m to 6.17*10⁻³ m, the nuclear fuel core has a diameter in the range from 4.90*10⁻³ m to 5.08*10⁻³ m and a weight from 0.46 kg to 0.51 kg, or an outer diameter of the cladding is in the range from 6.66*10⁻³ m to 6.99*10⁻³ m, the nuclear fuel core has a diameter in the range from 5.55*10⁻³ m to 5.75*10⁻³ m and a weight in the range from 0.60 kg to 0.66 kg for a reactor with 1150 to 1700 MW thermal rating, or an outer diameter of the cladding is in the range from 5.85*10⁻³ m to 6.17*10⁻³ m, the nuclear fuel core has a diameter in the range from 4.88*10⁻³ m to 5.07*10⁻³ m and a weight in the range from 0.67 kg to 0.75 kg, or an outer diameter of the cladding is in the range from 6.66*10⁻³ m to 6.99*10⁻³ m, the nuclear fuel core has a diameter in the range from 5.53*10⁻³m to 5.74*10⁻³ m and a weight in the range from 0.86 kg to 0.96 kg for a reactor with 2600 to 3900 MW thermal rating.

12. The fuel element as set forth in claim 10, wherein the inner diameter of the cladding is in the range from 5.01*10⁻³ m to 5.95*10⁻³ m for the reactor with 1150 to 1700 MW thermal rating, or the inner diameter of the cladding is in the range from 5.0*10⁻³ m to 5.93*10⁻³ m for the reactor with 2600 to 3900 MW thermal rating.

13. The fuel element as set forth in any one of claims 10 to 12 wherein for a reactor with 1375 MW thermal rating, the cladding has an outer and inner diameter in the range from 6.76*10⁻³ m to 6.88*10⁻³ m, and from 5.77*10⁻³ m to 5.83*10⁻³ m, respectively, and the nuclear fuel core has a diameter in the range from 5.64*10⁻³ m to 5.67*10⁻³ m and a weight in the range from 0.62 kg to 0.64 kg, or the cladding has an outer and inner diameter in the range from 5.97*10⁻³ m to 6.07*10⁻³ m and from 5.09*10⁻³ m to 5.14*10⁻³ m, respectively, and the nuclear fuel core has a diameter from 4.98*10⁻³ m to 4.99*10⁻³ m and a weight in the range from 0.48 kg to 0.5 kg.

14. The fuel element as set forth in any one of claims 10 to 12, wherein for the reactor with 3000 MW thermal rating, the cladding has an outer and inner diameter in the range from 6.76*10⁻³ m to 6.88*10⁻³ m and from 5.76*10⁻³ m to 5.83*10⁻³ m, respectively, the nuclear fuel core has a diameter in the range from 5.62*10⁻³ m to 5.66*10⁻³ m and a weight in the range from 0.89 kg to 0.93 kg, or the cladding has an outer and inner diameter in the range from 5.97*10⁻³ m to 6.07*10⁻³ m and from 5.08*10⁻³m to 5.14*10⁻³ m, respectively, the nuclear fuel core has a diameter in the range from 4.96*10⁻³ m to 4.98*10⁻³ m and a weight in the range from 0.69 kg to 0.72 kg.
